(19) Europäisches Patentamt
European Patent Office
Office européen des brevets

(11) **EP 3 163 252 A1**

(12) **EUROPEAN PATENT APPLICATION**

(43) Date of publication:
**03.05.2017 Bulletin 2017/18**

(51) Int Cl.:
**G01B 11/25** (2006.01)

(21) Application number: **16191643.2**

(22) Date of filing: **30.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.10.2015 JP 2015209974**

(71) Applicant: **OMRON CORPORATION**
**Kyoto, Kyoto 600-8530 (JP)**

(72) Inventor: **IIDA, Toyoo**
**Kyoto, Kyoto 600-8530 (JP)**

(74) Representative: **Horn Kleimann Waitzhofer**
**Patentanwälte PartG mbB**
**Ganghoferstrasse 29a**
**80339 München (DE)**

(54) **THREE-DIMENSIONAL SHAPE MEASUREMENT DEVICE, THREE-DIMENSIONAL SHAPE MEASUREMENT SYSTEM, PROGRAM, COMPUTER-READABLE STORAGE MEDIUM, AND THREE-DIMENSIONAL SHAPE MEASUREMENT METHOD**

(57) The 3D shape of a measurement object is measured accurately without using an encoder or other devices. A three-dimensional shape measurement device (10) includes a mark search unit (104) that calculates, using a search mark (40), a coordinate of a part of a surface of a measurement object (70) including an optical cutting line formed with line laser light (60).

FIG. 2

**Description**

FIELD

The present invention relates to a three-dimensional shape measurement device that measures the 3D shape of a measurement object by analyzing a plurality of images each including an optical cutting line formed with linear light on the surface of the measurement object.

BACKGROUND

Methods known in the art for obtaining information about the 3D shape of a measurement object through image analysis include an optical cutting method that uses the principle of triangulation. For example, Patent Literature 1 describes a three-dimensional shape measurement device that scans an object with patterned light relative to each other, and obtains a plurality of images each including a pattern appearing on the surface of the object by varying parameters affecting the luminance of the images. The three-dimensional shape measurement device selects, from the plurality of images, a target image having the luminance level of each pixel falling within a predetermined range, and uses luminance information for the pattern included in the target image to determine the 3D shape of the object.

CITATION LIST

PATENT LITERATURE

Patent Literature 1: Japanese Unexamined Patent Application Publication No. 2009-168658 (published on July 30, 2009)

SUMMARY

TECHNICAL PROBLEM

However, the technique described in Patent Literature 1 uses linear light to obtain the position of an optical cutting line on the surface of the measurement object, and thus involves use of an external position detection device such as an encoder, or a precise transport mechanism such as a robot. This complicates the structure, and disables easy implementation of the system.
In response to the above issue, one or more aspects of the present invention are directed to a three-dimensional shape measurement device, a three-dimensional shape measurement system, and a three-dimensional shape measurement method, and a program that enable accurate measurement of the 3D shape of a measurement object without using an external position detection device.

SOLUTION TO PROBLEM

In response to the above issue, a three-dimensional shape measurement device according to one aspect of the present invention includes an image obtaining unit, a height calculation unit, a coordinate calculation unit, and a map generator. The image obtaining unit obtains a plurality of captured images each including an optical cutting line and a reference mark. The optical cutting line is a line formed with linear light on a surface of a measurement object placed on a reference surface. The reference mark is an asymmetrical mark whose position relative to the measurement object is unchanged. The height calculation unit calculates, for each image, a height of a part of the measurement object including the optical cutting line from the reference surface. The coordinate calculation unit calculates, for each image, a coordinate of the part in a plane parallel to the reference surface using the reference mark. The map generator combines the height calculated for each image with the coordinate to generate data indicating the height of the measurement object at the coordinate obtained for each image.
The three-dimensional shape measurement device with the above structure calculates, for each image, the coordinate of the object part including the optical cutting line using the reference mark, combines the calculated coordinate with the height of the object part, and generates data indicating the height of the measurement object at the coordinate obtained for each image. The three-dimensional shape measurement device can thus calculate the position of the above object part without using an external position detection device such as an encoder or a precise transport mechanism such as a robot, and can generate data indicating the height of the measurement object at each coordinate. The three-dimensional shape measurement device thus precisely measures the 3D shape of the measurement object.
Further, the three-dimensional shape measurement device obtains the plurality of images each including a different optical cutting line. The three-dimensional shape measurement device can accurately calculate the coordinate of the above object part using the reference mark when, for example, the reference surface on which the measurement object is placed can deviate in its linear movement. More specifically, the three-dimensional shape measurement device can generate data indicating the height of the measurement object at each coordinate using the reference mark when the reference surface with the measurement object is moved with a method that can cause deviations, or for example when the reference surface is moved manually.

The three-dimensional shape measurement system known in the art linearly moves the measurement object only in one direction relative to the linear light, and may have a shaded part that is not illuminated with the linear light (part with no optical cutting line). To illuminate the shaded part (part with no optical cutting line) with the linear light, for example, the measurement object may be linearly rotated relative to the linear light. However, when the measurement object is linearly rotated relative to the linear light, the position of the optical cutting line formed with the linear light on the surface of the measurement object is even more difficult to determine than the position of the optical cutting line in the measurement object moved linearly in one direction relative to the linear light.

In contrast, the three-dimensional shape measurement device according to the aspect of the present invention calculates the position of the above object part using the reference mark. The three-dimensional shape measurement device can thus easily generate data indicating the height of the measurement object at each coordinate from the plurality of images obtained, for example, by linearly rotating the reference surface, without using an external position detection device such as an encoder or a precise transport mechanism such as a robot. In other words, the three-dimensional shape measurement device can illuminate a part of the measurement object with no optical cutting line (shaded part) that would be generated when the measurement object is linearly moved only in one direction relative to the linear light, with the linear light by, for example, linearly rotating the reference surface. The three-dimensional shape measurement device can thus generate data indicating the height of the measurement object at each coordinate from the plurality of images including an image including the optical cutting line using the reference mark.

Further, the three-dimensional shape measurement system known in the art typically involves calculations for matching between the scale in the direction for linearly moving the measurement object relative to the linear light (movement direction) and the scale in the direction orthogonal to the movement direction of the reference surface.

In contrast, the three-dimensional shape measurement device according to the aspect of the present invention calculates, for each image, the coordinate of the object part including the optical cutting line using the reference mark. This eliminates calculations for matching between the scale in the movement direction and the scale in the direction orthogonal to the movement direction.

In the three-dimensional shape measurement device according to the above aspect, the coordinate calculation unit prestores, as a reference position, a position of the reference mark in a captured image including the reference mark, and calculates, for each image, the coordinate of the part based on a parallel displacement and/or a rotational displacement of the position of the reference mark from the reference position in each image.

The three-dimensional shape measurement device with the above structure calculates, for each image, the coordinate of the above object part based on the parallel displacement and/or the rotational displacement of the position of the reference mark from the reference position in each image. The three-dimensional shape measurement device can thus calculate the position of the above object part in each image based on the displacement of the position of the reference mark from the reference position without using an encoder or other devices, and can generate data indicating the height of the measurement object at each coordinate.

In the three-dimensional shape measurement device according to the above aspect, the reference mark is on the reference surface.

The three-dimensional shape measurement device with the above structure generates, for each image, the data indicating the height of the measurement object at each coordinate using the reference mark on the reference surface. The three-dimensional shape measurement device can thus calculate the position of the above object part in each image using the reference mark on the reference surface, without using an encoder or other devices, and can generate data indicating the height of the measurement object at each coordinate.

In the three-dimensional shape measurement device according to the above aspect, the reference mark is included in the measurement object.

The three-dimensional shape measurement device with the above structure may use the reference mark included in the measurement object to generate, for each image, data indicating the height of the measurement object at each coordinate. The three-dimensional shape measurement device can thus calculate the position of the above object part in each image using the reference mark included in the measurement object without using an encoder or other devices, and can generate data indicating the height of the measurement object at each coordinate.

In the three-dimensional shape measurement device according to the above aspect, the reference mark has a color different from a color of the linear light.

In the above structure, the reference mark is colored differently from the linear light. In this case, the three-dimensional shape measurement device can accurately distinguish the reference mark and the optical cutting line formed with the linear light on the surface of the measurement object in each image. Thus, the three-dimensional shape measurement device can accurately calculate the height of the object part including the optical cutting line accurately distinguishable from the reference mark, and can accurately calculate the coordinate of the above object part using the reference mark accurately distinguishable from the linear light.

In the three-dimensional shape measurement device according to the above aspect, the linear light is polarized light.

In the above structure, the linear light is polarized light. In this case, the three-dimensional shape measurement device can accurately distinguish the reference mark that reflects natural light and the optical cutting line formed with the polarized light as the linear light on the surface of the measurement object in each image. Thus, the three-dimensional shape measurement device can accurately calculate the height of the object part including the optical cutting line accurately distinguishable from the reference mark, and can accurately calculate the coordinate of the above object part using the reference mark accurately distinguishable from the linear light.

In the three-dimensional shape measurement device according to the above aspect, the coordinate calculation unit searches a predetermined area that is a part of each image to detect the reference mark included in each image.

The three-dimensional shape measurement device with the above structure searches the predetermined area that is a part of each image to detect the reference mark included in each image. In each image, an area including the reference mark and an area including the above object part are spatially separate from each other. The three-dimensional shape measurement device searches the predetermined area to detect the reference mark, and thus can improve the accuracy and the speed for detecting the reference mark.

In response to the above issue, a three-dimensional shape measurement system according to another aspect of the present invention includes an illumination device, an imaging device, and a three-dimensional shape measurement device. The illumination device applies linear light to a measurement object placed on a reference surface. The imaging device obtains a plurality of captured images each including an optical cutting line and a reference mark. The optical cutting line is a line formed with the linear light applied by the illumination device on a surface of the measurement object. The reference mark is an asymmetrical mark whose position relative to the measurement object is unchanged. The three-dimensional shape measurement device calculates, for each image obtained by the imaging device, a height of a part of the measurement object including the optical cutting line from the reference surface, calculates a coordinate of the object part in a plane parallel to the reference surface using the reference mark, and combines the height with the coordinate to generate data indicating the height of the measurement object at the coordinate obtained for each image.

The three-dimensional shape measurement system with the above structure calculates, for each image obtained by the imaging device, the coordinate of the above object part including the optical cutting line using the reference mark, combines the calculated coordinate with the height of the object part, and generates data indicating the height of the measurement object at the coordinate obtained for each image. The three-dimensional shape measurement system can thus calculate the position of the above object part without using an external position detection device such as an encoder or a precise transport mechanism such as a robot, and can generate data indicating the height of the measurement object at each coordinate. The three-dimensional shape measurement system thus precisely measures the 3D shape of the measurement object.

Further, the three-dimensional shape measurement system obtains the plurality of images each including a different optical cutting line. The three-dimensional shape measurement system can accurately calculate the coordinate of the above object part using the reference mark when, for example, the reference surface on which the measurement object is placed can deviate in its linear movement. More specifically, the three-dimensional shape measurement system can generate data indicating the height of the measurement object at each coordinate using the reference mark when the reference surface with the measurement object is moved with the method that can cause deviations, or for example when the reference surface is moved manually.

The three-dimensional shape measurement system known in the art linearly moves the measurement object only in one direction relative to the linear light, and may have the shaded part that is not illuminated with the linear light (part with no optical cutting line). To illuminate the shaded part (part with no optical cutting line) with the linear light, for example, the measurement object may be linearly rotated relative to the linear light. However, when the measurement object is linearly rotated relative to the linear light, the position of the optical cutting line formed with the linear light on the surface of the measurement object is even more difficult to determine than the position of the optical cutting line in the measurement object moved linearly in one direction relative to the linear light.

In contrast, the three-dimensional shape measurement system according to the aspect of the present invention calculates the position of the above object part using the reference mark. The three-dimensional shape measurement system can thus easily generate data indicating the height of the measurement object at each coordinate from the plurality of images obtained, for example, by linearly rotating the reference surface, without using an external position detection device such as an encoder or a precise transport mechanism such as a robot. In other words, the three-dimensional shape measurement system can illuminate a part of the measurement object with no optical cutting line (shaded part) that would be generated when the measurement object is linearly moved only in one direction relative to the linear light, with the linear light by, for example, linearly rotating the reference surface. The three-dimensional shape measurement system can thus generate data indicating the height of the measurement object at each coordinate from the plurality of images including an image including the optical cutting line using the reference mark.

Further, the three-dimensional shape measurement system known in the art typically involves calculations for matching between the scale in the direction for linearly moving the measurement object relative to the linear light and the scale in the direction orthogonal to the movement direction of the reference surface.

In contrast, the three-dimensional shape measurement system according to the aspect of the present invention calculates, for each image, the coordinate of the object part including the optical cutting line using the reference mark. This eliminates calculations for matching between the scale in the movement direction and the scale in the direction orthogonal to the movement direction.

In response to the above issue, a three-dimensional shape measurement method according to another aspect of the present invention includes an image obtaining process, a height calculation process, a coordinate calculation process, and a map generation process. The image obtaining process includes obtaining a plurality of captured images each including an optical cutting line and a reference mark. The optical cutting line is a line formed with linear light on a surface of a measurement object placed on a reference surface. The reference mark is an asymmetrical mark whose position relative to the measurement object is unchanged. The height calculation process includes calculating, for each image, a height of a part of the measurement object including the optical cutting line from the reference surface. The coordinate calculation process includes calculating, for each image, a coordinate of the object part in a plane parallel to the reference surface using the reference mark. The map generation process includes combining the height calculated for each image with the coordinate to generate data indicating the height of the measurement object at the coordinate obtained for each image.

The above three-dimensional shape measurement method includes calculating, for each image, the coordinate of the object part including the optical cutting line using the reference mark, combining the calculated coordinate with the height of the object part, and generating data indicating the height of the measurement object at the coordinate obtained for each image. The three-dimensional shape measurement method thus be used to calculate the position of the above object part without using an external position detection device such as an encoder or a precise transport mechanism such as a robot, and to generate data indicating the height of the measurement object at each coordinate. The three-dimensional shape measurement method enables precise measurement of the 3D shape of the measurement object.

Further, the three-dimensional shape measurement method includes obtaining the plurality of images each including a different optical cutting line. The three-dimensional shape measurement method can be used to accurately calculate the coordinate of the above object part using the reference mark when, for example, the reference surface on which the measurement object is placed can deviate in its linear movement. More specifically, the three-dimensional shape measurement method can be used to generate data indicating the height of the measurement object at each coordinate using the reference mark when the reference surface with the measurement object is moved with the method that can cause deviations, or for example when the reference surface is moved manually.

A three-dimensional shape measurement method known in the art includes linearly moving the measurement object only in one direction relative to the linear light, and may generate a shaded part that is not illuminated with the linear light (part with no optical cutting line). To illuminate the shaded part (part with no optical cutting line) with the linear light, for example, the measurement object may be linearly rotated relative to the linear light. However, when the measurement object is linearly rotated relative to the linear light, the position of the optical cutting line formed with the linear light on the surface of the measurement object is even more difficult to determine than the position of the optical cutting line in the measurement object moved linearly in one direction relative to the linear light.

In contrast, the three-dimensional shape measurement method according to the aspect of the present invention is used to calculate the position of the above object part using the reference mark. The three-dimensional shape measurement method can thus be used to easily generate data indicating the height of the measurement object at each coordinate from the plurality of images obtained, for example, by linearly rotating the reference surface, without using an external position detection device such as an encoder or a precise transport mechanism such as a robot. In other words, the three-dimensional shape measurement method can be used to illuminate a part with no optical cutting line (shaded part) that would be generated when the measurement object is linearly moved only in one direction relative to the linear light, with the linear light by, for example, linearly rotating the reference surface. The three-dimensional shape measurement method can thus be used to generate, using the reference mark, data indicating the height of the measurement object at each coordinate from the plurality of images including an image including the optical cutting line (shaded part).

Further, the three-dimensional shape measurement method known in the art typically involves calculations for matching between the scale in the direction for linearly moving the measurement object relative to the linear light and the scale in the direction orthogonal to the movement direction of the reference surface.

In contrast, the three-dimensional shape measurement method according to the aspect of the present invention is used to calculate, for each image, the coordinate of the object part including the optical cutting line using the reference mark. This eliminates calculations for matching between the scale in the movement direction and the scale in the direction orthogonal to the movement direction.

ADVANTAGEOUS EFFECTS

The three-dimensional shape measurement device and other aspects of the present invention enable accurate measurement of the 3D shape of a measurement object without using an external position detection device or a precise transport mechanism such as a robot.

BRIEF DESCRIPTION OF THE DRAWINGS

Fig. 1 is a block diagram showing the main components of a three-dimensional shape measurement device, an illumination device, and an imaging device included in a three-dimensional shape measurement system according to a first embodiment of the present invention.
Fig. 2 is a diagram describing an overview of the three-dimensional shape measurement system shown in Fig. 1.
Figs. 3A to 3D are diagrams describing the processing performed by the three-dimensional shape measurement device using images obtained from the imaging device shown in Fig. 1.
Fig. 4 is a diagram describing the processing performed by the three-dimensional shape measurement device for images obtained from the imaging device shown in Fig. 1.
Figs. 5A and 5B are diagrams describing a method used by the three-dimensional shape measurement device shown in Fig. 1 to obtain an image without a shaded part of the measurement object (part not illuminated with linear light from an illumination device shown in Fig 1).
Figs. 6A to 6D are diagrams showing examples of search marks (mark part) used by the three-dimensional shape measurement device shown in Fig. 1.
Fig. 7 is a diagram describing a method used by the three-dimensional shape measurement device shown in Fig. 1 to detect marks from an image obtained by the imaging device shown in Fig. 1.
Figs. 8A and 8B are flowcharts showing the processing performed by the three-dimensional shape measurement device shown in Fig. 1.
Fig. 9 is a diagram describing an overview of a three-dimensional shape measurement system known in the art.
Fig. 10 is a diagram describing a method used by the three-dimensional shape measurement system known in the art shown in Fig. 9 to generate data representing the 3D shape of a measurement object using two-dimensional images obtained by a receiver unit.
Fig. 11 is a diagram describing one issue associated with the three-dimensional shape measurement system known in the art shown in Fig. 9, or specifically an unilluminated part of a measurement object that is not illuminated with linear light applied from an emitter unit.

DETAILED DESCRIPTION

First Embodiment

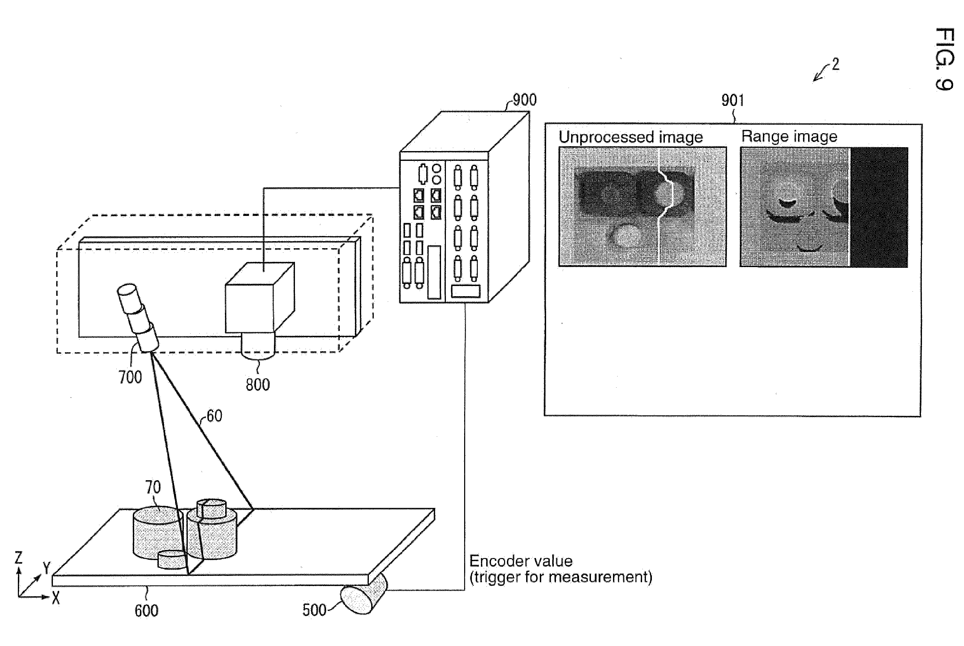

For easier understanding of a three-dimensional shape measurement system 1 according to one embodiment of the present invention, a three-dimensional shape measurement system 2 known in the art will now be described with reference to Figs. 9 to 11.

Overview of Three-Dimensional Shape Measurement system Known in the Art

Fig. 9 is a diagram describing an overview of the three-dimensional shape measurement system 2 known in the art. As shown in Fig. 9, the three-dimensional shape measurement system 2 includes an encoder 500, a conveyor 600, an emitter unit 700, a receiver unit 800, and a three-dimensional shape measurement device 900 known in the art.
The emitter unit 700 illuminates the surface of a measurement object 70 placed on a stage with line laser light 60 (linear light). The receiver unit 800 captures an image of the measurement object 70 illuminated with the line laser light 60. The conveyor 600 includes the stage on which the measurement object 70 is to be placed, and moves the stage with the measurement object 70 linearly in a direction (a sub-scanning direction, which is X-direction in Fig. 9) orthogonal to the main-scanning direction of the receiver unit 800 (Y-direction in Fig. 9).
The encoder 500 detects the position of the stage (or the measurement object 70 placed on the stage) that is transported by the conveyor 600. For example, the encoder 500 starts an optical cutting process (or linearly moving the stage with the conveyor 600 and capturing an image of the linearly moving measurement object 70 with the receiver unit 800), and calculates the parallel displacement of the measurement object 70 (or the stage). More precisely, the encoder 500 outputs pulses indicating the number of revolutions of the encoder 500 caused by the linear movement of the measurement object 70 (or the stage) to the three-dimensional shape measurement device 900 known in the art. The three-dimensional shape measurement device 900 then calculates the displacement of the measurement object 70 (or the stage) based on the pulses received from the encoder 500 (pulses indicating the revolution number of the encoder 500). The three-dimensional shape measurement device 900 thus involves an operation for presetting the displacement per pulse (mm/pulse or mm/revolution) of the encoder 500.

The three-dimensional shape measurement system 2 known in the art, which includes the encoder 500, the conveyor 600, the emitter unit 700, and the receiver unit 800 described above, captures successive images of the measurement object 70 using the receiver unit 800, while moving the measurement object 70 (or the stage) in the sub-scanning direction using the conveyor 600. The three-dimensional shape measurement system 2 obtains a plurality of images each including one optical cutting line formed with the line laser light 60 on the surface of the measurement object 70, and measures the 3D shape of the entire measurement object 70 using the plurality of images.

The three-dimensional shape measurement system 2 known in the art calculates the displacement of the conveyor 600 using the encoder 500, and generates a range image (an image representing the 3D shape of the entire measurement object 70, hereafter also be referred to as a group of points). More specifically, the three-dimensional shape measurement system 2 known in the art linearly moves the measurement object 70 using the conveyor 600, and determines the position of the stage, in particular the X coordinate of the optical cutting line in a plane parallel to the stage, using the encoder 500.

Among the camera coordinates (coordinates in the plane parallel to the stage), the Y coordinate is assumed to be fixed in the real coordinate space. More specifically, for the luminance I (X(T), Y(T)) at a point obtained at time T and the luminance I (X(T+1), Y(T+1)) at the same point obtained at time T+1, the X coordinate value changes as the conveyor 600 moves, whereas the Y coordinate value is constantly written as Y(T) = Y(T+1). The correspondence between the Y coordinate value and the position (mm) in the real coordinate space is calculated in advance based on the field of view of the camera (the field of view of the receiver unit 800) and the number of pixels. Thus, the Y coordinate value is constant and known in advance, whereas the X coordinate value changes as the conveyor 600 moves.

Further, the three-dimensional shape measurement system 2 known in the art performs profiling using line laser light, and calculates the height (Z coordinate) of a part of the measurement object 70 including the optical cutting line based on the principle of triangulation. The three-dimensional shape measurement system 2 combines the X coordinate of the optical cutting line obtained from the encoder 500 with the height (Z coordinate) of the part of the measurement object 70 including the optical cutting line calculated using the plurality of images to generate a range image of the measurement object 70. As described above, the Y coordinate value of the optical cutting line is assumed to be constant and known in advance.

When the three-dimensional shape measurement system 2 known in the art does not use the encoder 500, the three-dimensional shape measurement system 2 obtains the X coordinate of the optical cutting line by assuming that the stage is transported at a constant speed by the conveyor 600. For example, the three-dimensional shape measurement system 2 operates the receiver unit 800 to capture an image of the measurement object 70 at constant intervals while transporting the stage at a constant speed using the conveyor 600, and thus obtains the captured image at every predetermined distance (at every predetermined image capturing position). However, the three-dimensional shape measurement system 2 that does not use the encoder 500 and obtains the X coordinate of the optical cutting line by assuming that the stage transport speed of the conveyor 600 is constant can measure the three-dimensional shape with lower accuracy when, for example, the transport speed of the conveyor 600 varies.

More specifically, the three-dimensional shape measurement system 2 known in the art calculates the height (Z coordinate) of the part of the measurement object 70 including the optical cutting line using the captured image, and obtains the X coordinate of the optical cutting line based on data other than the captured image (based on, for example, data obtained from the encoder 500 or based on the stage transport speed of the conveyor 600). As described above, the Y coordinate value of the optical cutting line is assumed to be constant and known in advance.

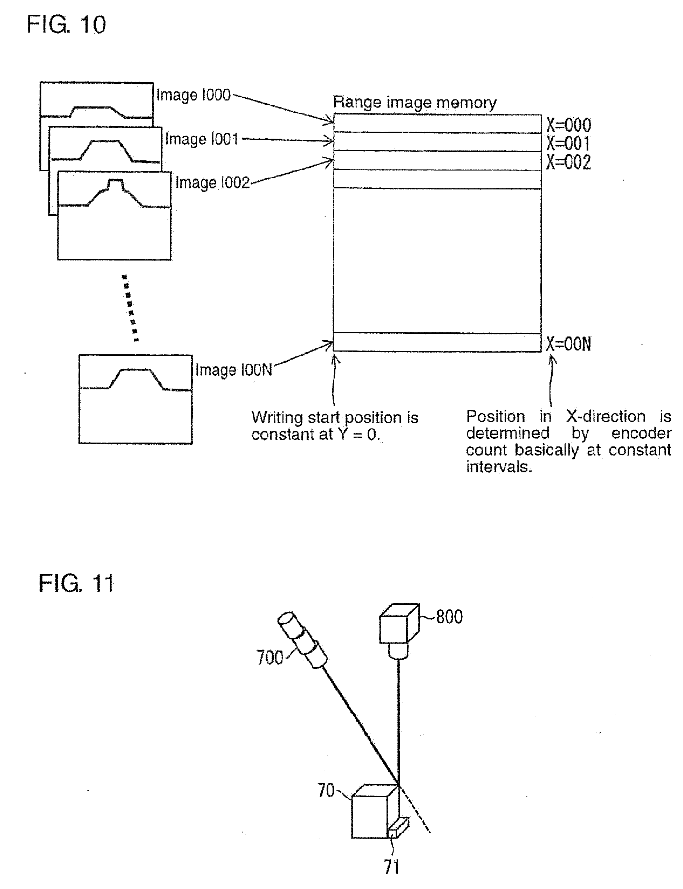

Fig. 10 is a diagram describing a method used by the three-dimensional shape measurement system 2 known in the art to generate data representing the 3D shape of the measurement object 70 using two-dimensional images (captured images) obtained by the receiver unit 800.

The three-dimensional shape measurement system 2 known in the art (three-dimensional shape measurement device 900 known in the art) obtains a plurality of captured images (images I000, I001, I002, and to I00N) of the measurement object 70, which are captured every when the conveyor 600 moves the measurement object 70 by the predetermined distance. The three-dimensional shape measurement system 2 known in the art calculates the profile (height information, or the Z coordinate) of an object part including one optical cutting line in each of the captured images. The three-dimensional shape measurement system 2 then arranges the obtained Z coordinates and also the X coordinates of the object part obtained from the encoder 500 in a range image memory to obtain a range image (a group of points). More specifically, the three-dimensional shape measurement device 900 known in the art arranges the height information sets (Z coordinates) of the object part including the optical cutting line, and the X coordinates of the object part. As described above, the Y coordinate value of the object part is assumed to be constant and known in advance.

When the encoder 500 is not used, the three-dimensional shape measurement system 2 known in the art controls the transport speed of the measurement object 70 with the conveyor 600 to be constant, and calculates the X coordinate of the object part in each image captured by the receiver unit 800 at every predetermined interval.

As shown in Fig. 10, the captured images (images I000, 1001, 1002, and to I00N) captured by the receiver unit 800 each include pixels contiguous in the main-scanning direction (Y-direction) of the receiver unit 800. For each captured image including such linearly arranged pixels, for example, the three-dimensional shape measurement device 900 known in the art sequentially calculates the height of an image I000 (X = 000) from its one end (writing start position) toward the other end (end position). The three-dimensional shape measurement device 900 known in the art first sets the Y coordinate of a pixel in the main-scanning direction to 0, and then calculates the height Z of the measurement object 70 (the distance from the stage) at the Y coordinate based on the principle of triangulation. The three-dimensional shape measurement device 900 known in the art associates the calculated height Z with the Y coordinate in the main-scanning direction and the X coordinate in the sub-scanning direction, and stores these coordinates into the range image memory (profile calculation process).

The three-dimensional shape measurement device 900 known in the art repeats the profile calculation process for each of the captured images (images I000, 1001, 1002, and to I00N), and accumulates the height information at each position in the main-scanning direction of the measurement object 70 into the range image memory.

For example, the three-dimensional shape measurement system 2 known in the art first performs the profile calculation process for the image I000 (X = 000). When the profile calculation process for the image I000 is complete, the conveyor 600 displaces the measurement object 70 by a predetermined distance in the sub-scanning direction (X-direction). The receiver unit 800 then captures an image of the measurement object 70 again to obtain the captured image I001 (X = 001) of the measurement object 70. More specifically, the captured image I001 includes an optical cutting line displaced from the optical cutting line in the image I000 by the predetermined distance in the sub-scanning direction.

To obtain an image captured at every predetermined distance, the receiver unit 800 captures an image of the measurement object 70 at every constant time interval while the transport speed of the conveyor 600 is being controlled to be constant. In some embodiments, the encoder 500 may transmit a signal to the three-dimensional shape measurement device 900 known in the art every time when the encoder 500 detects the movement of the conveyor 600 by a predetermined distance, and the three-dimensional shape measurement device 900 known in the art may capture an image using the receiver unit 800 in response to the signal.

The three-dimensional shape measurement system 2 known in the art performs the profile calculation process again for the captured image I001 including the optical cutting line displaced from the optical cutting line in the image I000 by the predetermined distance in the sub-scanning direction. When the profile calculation process is complete for the image I001, the conveyor 600 displaces the measurement object 70 by the predetermined distance in the sub-scanning direction (X-direction), and then the receiver unit 800 captures an image of the measurement object 70 again to obtain the captured image I002 (X = 002) of the measurement object 70. The three-dimensional shape measurement system 2 known in the art then performs the profile calculation process for the image 1002.

Through the processing described above performed repeatedly, the range image memory sequentially accumulates the height information at each position in the sub-scanning direction, and eventually accumulates three-dimensional shape information for the entire measurement object 70 (forms the range image). In the three-dimensional shape measurement system 2 known in the art, the conveyor 600 moves the measurement object 70 by the predetermined distance, and the receiver unit 800 captures an image of the measurement object 70, and the three-dimensional shape measurement device 900 known in the art analyzes the captured image. This processing is repeated to measure the 3D shape of the measurement object 70 (generate the range image of the measurement object 70).

The three-dimensional shape measurement system 2 known in the art determines the position in X-direction (X coordinate) in each captured image (one optical scanning line in each captured image) by transforming the coordinate based on the count of the encoder 500 (or the transport speed of the conveyor 600). The three-dimensional shape measurement system 2 known in the art uses the same scale in X-direction (the distance between the X coordinates, or for example, the distance between X = 000 and X = 001, and the distance between X = 001 and X = 002), which is set as the predetermined distance.

Although the three-dimensional shape measurement system 2 known in the art can obtain the scale in Y-direction from the plurality of captured images, the system cannot calculate the scale in X-direction from the plurality of captured images. The three-dimensional shape measurement system 2 known in the art thus involves additional processing for adjusting the scales to match between the X axis and the Y axis in the plurality of captured images.

More precisely, the three-dimensional shape measurement system 2 known in the art collates the two measurement methods having different principles and different units of measurement. For the X axis, the scale is transformed from N pulses/revolution (encoder 500), mm/revolution (conveyor 600), and to mm/pulse (conveyor 600). For the Y axis, the scale is transformed into mm/pixel based on the camera view field (the view field of the receiver unit 800) in Y-direction and the number of pixels on the Y axis of the camera (receiver unit 800). In other words, the three-dimensional shape measurement system 2 known in the art transforms the scale from mm/pulse of the encoder 500 and mm/pixel of the camera (receiver unit 800) into one pulse of the encoder 500 = one pixel of the camera (receiver unit 800).

Fig. 11 is a diagram describing one issue associated with the three-dimensional shape measurement system 2 known in the art, or specifically an unilluminated part of the measurement object 70 that is not illuminated with the line laser light 60 (linear light) from the emitter unit 700.

As described with reference to Fig. 9, the three-dimensional shape measurement system 2 known in the art linearly moves the measurement object 70 only in one direction relative to the line laser light 60 (in the sub-scanning direction, or X-direction). When the measurement object 70 is moved linearly in one direction, the measurement object 70 can have a shaded part 71 that is not illuminated with the line laser light 60 (part with no optical cutting line) as shown in Fig. 11. The shaded part 71 does not undergo the profile calculation process, and thus its height is not calculated.

To illuminate the shaded part 71 with the line laser light 60, for example, the measurement object 70 may be linearly rotated relative to the line laser light 60. However, when the measurement object 70 is linearly rotated relative to the line laser light 60, the position of the optical cutting line formed with the line laser light 60 is even more difficult to determine by using the encoder 500 than the position of the optical cutting line in the measurement object 70 moved linearly in one direction relative to the line laser light 60. Thus, the three-dimensional shape measurement system 2 known in the art cannot easily capture an image of the shaded part 71 by illuminating the shaded part 71 (part including no optical cutting line) with the line laser light 60.

The three-dimensional shape measurement system 2 known in the art uses the method for linearly moving the measurement object 70 (or the stage), and moves the measurement object 70 (or the stage) only in one direction (X-direction) using the conveyor 600, and thus does not perform rescanning. When rotating the measurement object 70 (or the stage), the three-dimensional shape measurement system 2 known in the art thus does not reconstruct the data in the memory to reflect such rotation. The three-dimensional shape measurement system 2 known in the art cannot construct an intended range image (a group of points) by rotating the workpiece (measurement object 70) and then linearly moving the workpiece again using the conveyor 600.

The three-dimensional shape measurement system 2 known in the art described with reference to Figs. 9 to 11 will now be summarized. The three-dimensional shape measurement system 2 known in the art obtains the X coordinate of an object part to undergo the profile calculation process (part including the optical cutting line) using the encoder 500 or other devices. As described above, the Y coordinate value of the object part to undergo the profile calculation process is assumed to be constant and known in advance.

Thus, the three-dimensional shape measurement system 2 known in the art uses the encoder 500 or other devices or a precise transport mechanism such as a robot (e.g., the conveyor 600). This complicates the system configuration, and increases the cost for constructing the system. To obtain the X coordinate of the above object part without using the encoder 500, the three-dimensional shape measurement system 2 assumes the stage transport speed of the conveyor 600 to be constant. When the encoder 500 is not used, the three-dimensional shape measurement system 2 is affected by variations in the stage transport speed of the conveyor 600. When the stage transported using the conveyor 600 in the three-dimensional shape measurement system 2 deviates in the main-scanning direction (Y-direction), such deviations directly affect the resultant range image. For example, when the stage transported by the conveyor 600 shakes in its linear movement, such shakes cause deviations in the resultant range image. In addition, the three-dimensional shape measurement system 2 known in the art cannot calculate the X coordinate in each captured image (more precisely the optical cutting line included in each captured image) from the plurality of captured image, and thus adjusts the scales to match between X-direction and Y-direction. Further, the three-dimensional shape measurement system 2 known in the art simply moving the measurement object 70 linearly in one direction and illuminating the object part with the line laser light 60 cannot capture an image of the shaded part 71, which thus does not undergo the profile calculation process (in other words, cannot calculate the height).

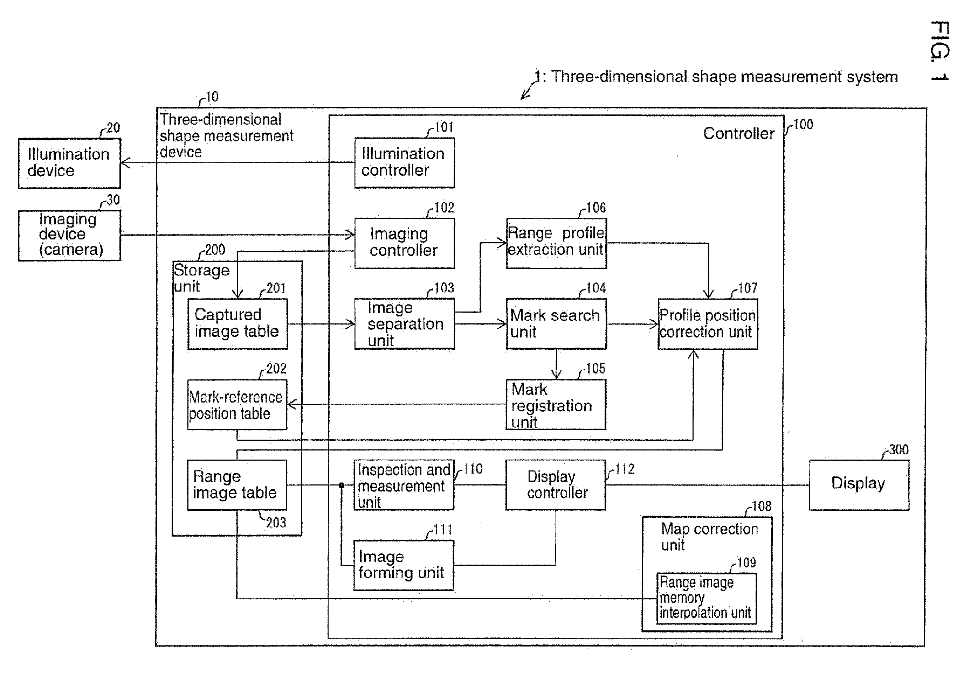

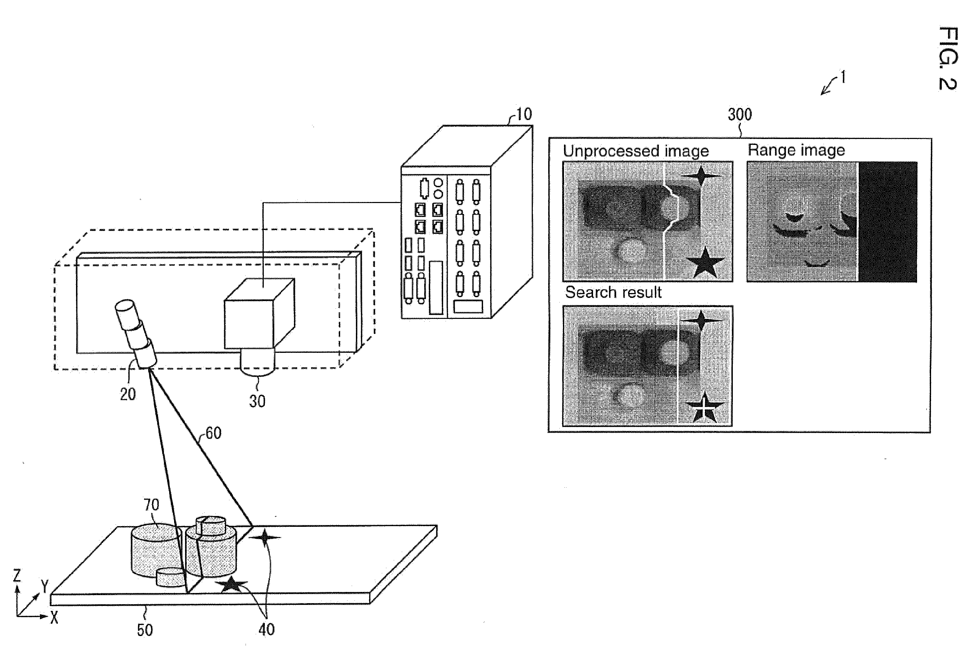

In comparison with the three-dimensional shape measurement system 2 known in the art briefly described above, a three-dimensional shape measurement system 1 according to a first embodiment of the present invention will now be described with reference to Figs. 1 to 8B. The three-dimensional shape measurement system 1 will first be described briefly with reference to Fig. 2.

Overview of Three-Dimensional Shape Measurement System According to Embodiment

Fig. 2 is a diagram describing an overview of the three-dimensional shape measurement system 1. As shown in Fig. 2, the three-dimensional shape measurement system 1 includes a three-dimensional shape measurement device 10, an illumination device 20, and an imaging device 30.

The illumination device 20 illuminates a measurement object 70 placed on a stage 50 with line laser light 60 (linear light). The illumination device 20 corresponds to the emitter unit 700 in the three-dimensional shape measurement system 2 known in the art.

The imaging device 30 is a camera (two-dimensional camera) for capturing an image of an optical cutting line formed with the line laser light 60 on the surface of the measurement object 70. The imaging device 30 corresponds to the receiver unit 800 in the three-dimensional shape measurement system 2 known in the art. The imaging device 30 captures a plurality of images of the measurement object 70 placed on the stage 50, which is moved linearly. Each of the captured images includes a different optical cutting line. Each of the images includes asymmetrical search marks 40 (reference marks) whose positions relative to the measurement object 70 are unchanged. More specifically, the imaging device 30 captures the plurality of images each including one or more search marks 40 and an optical cutting line (a single optical cutting line in this example), and transmits the plurality of images (image data representing the plurality of images) to the three-dimensional shape measurement device 10.

The three-dimensional shape measurement device 10 analyzes the plurality of images obtained from the imaging device 30 to measure the 3D shape of the measurement object 70, such as the depth of recesses in the surface of the measurement object 70, the height of protrusions on the surface of the measurement object 70, and the positions of the recesses and protrusions. The three-dimensional shape measurement device 10 may be used as, for example, an inspection device for circuit boards, although it can also have any other use.

The three-dimensional shape measurement device 10 will now be described briefly. The three-dimensional shape measurement device 10 includes an imaging controller 102 (image obtaining unit), a range profile extraction unit 106 (height calculation unit), a mark search unit 104 (coordinate calculation unit), and a profile position correction unit 107 (map generator). The imaging controller 102 (image obtaining unit) obtains a plurality of images (images I000, I001, I002, and to I00N) each including an optical cutting line formed with the line laser light 60 (linear light) on the surface of the measurement object 70 placed on the stage 50 (reference surface) and asymmetrical search marks 40 (reference marks) whose positions relative to the measurement object 70 are unchanged. The range profile extraction unit 106 (height calculation unit) calculates, for each image, the height of a part of the measurement object 70 including the optical cutting line from the stage 50. The mark search unit 104 (coordinate calculation unit) calculates, for each image, the coordinate of the above object part in a plane parallel to the stage 50 using the search marks 40. The profile position correction unit 107 (map generator) combines the height with the coordinate calculated for each image to generate data indicating the height of the measurement object 70 at the coordinate obtained for each image.

The three-dimensional shape measurement device 10 with the above structure calculates, for each image, the coordinate of the object part including the optical cutting line using the search marks 40, combines the calculated coordinate with the height of the object part, and generates data indicating the height of the measurement object 70 at each coordinate. The three-dimensional shape measurement device 10 can thus calculate the position of the above object part without using an external position detection device such as an encoder (e.g., the encoder 500 in the three-dimensional shape measurement system 2 known in the art) or a precise transport mechanism such as a robot (e.g., the conveyor 600 in the three-dimensional shape measurement system 2 known in the art), and can generate data indicating the height of the measurement object 70 at each coordinate. The three-dimensional shape measurement device 10 thus precisely measures the 3D shape of the measurement object 70.

Further, the three-dimensional shape measurement device 10 obtains the plurality of images each including a different optical cutting line. The three-dimensional shape measurement device 10 can accurately calculate the coordinate of the above object part using the search marks 40 when, for example, the stage 50 on which the measurement object 70 is placed can deviate in its linear movement. More specifically, the three-dimensional shape measurement device 10 can generate data indicating the height of the measurement object 70 at each coordinate using the search marks 40 when the stage 50 with the measurement object 70 is moved with a method that can cause deviations, or for example when the stage 50 is moved manually.

The three-dimensional shape measurement system 2 known in the art linearly moves the measurement object 70 only in one direction relative to the line laser light 60, and may have the shaded part 71 that is not illuminated with the line laser light 60 (part with no optical cutting line). To illuminate the shaded part 71 (part with no optical cutting line) with the line laser light 60, for example, the measurement object 70 may be linearly rotated relative to the line laser light 60. However, when the measurement object 70 is linearly rotated relative to the line laser light 60, the position of the optical cutting line formed with the line laser light 60 on the surface of the measurement object 70 is even more difficult to determine than the position of the optical cutting line in the measurement object 70 moved linearly in one direction relative to the line laser light 60.

In contrast, the three-dimensional shape measurement device 10 according to the embodiment of the present invention calculates the position of the above object part using the search marks 40. The three-dimensional shape measurement device 10 can thus easily generate data indicating the height of the measurement object 70 at each coordinate from the plurality of images obtained by, for example, linearly rotating the stage 50, without using an external position detection device such as an encoder or a precise transport mechanism such as a robot. In other words, the three-dimensional shape measurement device 10 can illuminate the part with no optical cutting line (shaded part 71) when the measurement object 70 is linearly moved only in one direction relative to the line laser light 60, with the line laser light 60 applied by, for example, linearly rotating the stage 50. The three-dimensional shape measurement device 10 can thus generate data indicating the height of the measurement object 70 at each coordinate from the plurality of images including an image including the optical cutting line (shaded part 71) using the search marks 40.

Further, the three-dimensional shape measurement system 2 known in the art typically involves calculations for matching between the scale in the direction for linearly moving the measurement object 70 relative to the line laser light 60 (movement direction) and the scale in the direction orthogonal to the movement direction of the stage 50.

In contrast, the three-dimensional shape measurement device 10 according to the embodiment of the present invention calculates, for each image, the coordinate of the object part including the optical cutting line using the search marks 40. This eliminates calculations for matching between the scale in the movement direction and the scale in the direction orthogonal to the movement direction.

The mark search unit 104 in the three-dimensional shape measurement device 10 prestores the position of each search mark 40 included in an image including the search marks 40 as its reference position P0. The coordinate of the object part is then calculated based on the parallel displacement and/or the rotational displacement of the position of each search mark 40 from the reference position P0 in each of the images.

The three-dimensional shape measurement device 10 with the above structure calculates, for each image, the coordinate of the above object part based on the parallel displacement and/or the rotational displacement of the position of each search mark 40 from the reference position P0 in each image. The three-dimensional shape measurement device 10 can thus calculate the position of the above object part in each image based on the displacement of the position of each search mark 40 from the reference position P0 without using an encoder or other devices, and can generate data indicating the height of the measurement object 70 at each coordinate.

As shown in Fig. 2, the search marks 40 are formed on the stage 50. The three-dimensional shape measurement device 10 with the above structure generates, for each image, data indicating the height of the measurement object 70 at each coordinate using the search marks 40 on the stage 50. The three-dimensional shape measurement device 10 can thus calculate the position of the above object part in each image using the search marks 40 on the stage 50, without using an encoder or other devices, and can generate data indicating the height of the measurement object 70 at each coordinate.

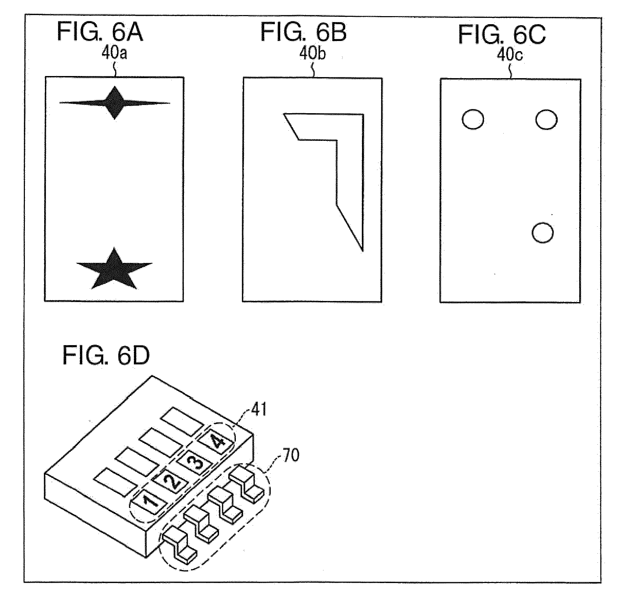

As described in detail later with reference to Figs. 6A to 6D, the search marks 40 may not be formed on the stage 50 in one or more embodiments of the present invention. In some embodiments, an asymmetrical mark part 41 included in the measurement object 70 in a plane parallel to the stage 50 may be used as such search marks 40.

The three-dimensional shape measurement system 1 described above, including the three-dimensional shape measurement device 10, the illumination device 20, and the imaging device 30, can now be summarized. The three-dimensional shape measurement system 1 includes the illumination device for illuminating the measurement object 70 placed on the stage 50 with the line laser light 60, the imaging device for obtaining the plurality of images each including the optical cutting line formed with the line laser light 60 applied from the illumination device on the surface of the measurement object 70, and the asymmetrical search marks 40 whose positions relative to the measurement object 70 are unchanged, and the three-dimensional shape measurement device 10 for calculating, for each image obtained by the imaging device, the height of the part of the measurement object 70 including the optical cutting line from the stage 50, and for calculating the coordinate of the above object part in the plane parallel to the stage 50 using the search marks 40, and combining the height with the coordinate to generate data indicating the height of the measurement object 70 at each coordinate.

The three-dimensional shape measurement system 1 with the above structure calculates, for each image obtained by the imaging device, the coordinate of the above object part including the optical cutting line using the search marks 40, combines the calculated coordinate with the height of the object part, and generates data indicating the height of the measurement object 70 at each coordinate. The three-dimensional shape measurement system 1 can thus calculate the position of the above object part without using an external position detection device such as an encoder or a precise transport mechanism such as a robot, and can generate data indicating the height of the measurement object 70 at each coordinate. The three-dimensional shape measurement system 1 thus precisely measures the 3D shape of the measurement object 70.

Further, the three-dimensional shape measurement system 1 obtains the plurality of images each including a different optical cutting line. The three-dimensional shape measurement system 1 can accurately calculate the coordinate of the above object part using the search marks 40 when, for example, the stage 50 on which the measurement object 70 is placed can deviate in its linear movement. More specifically, the three-dimensional shape measurement system 1 can generate data indicating the height of the measurement object 70 at each coordinate using the search marks 40 when the stage 50 with the measurement object 70 is moved with the method that can cause deviations, or for example when the stage 50 is moved manually.

The three-dimensional shape measurement system 2 known in the art linearly moves the measurement object 70 only in one direction relative to the line laser light 60, and may have the shaded part 71 that is not illuminated with the line laser light 60 (part with no optical cutting line). To illuminate the shaded part 71 (part with no optical cutting line) with the line laser light 60, for example, the measurement object 70 may be linearly rotated relative to the line laser light 60. However, when the measurement object 70 is linearly rotated relative to the line laser light 60, the position of the optical cutting line formed with the line laser light 60 on the surface of the measurement object 70 is even more difficult to determine than the position of the optical cutting line in the measurement object 70 moved linearly in one direction relative to the line laser light 60.

In contrast, the three-dimensional shape measurement system 1 according to the embodiment of the present invention calculates the position of the above object part using the search marks 40. The three-dimensional shape measurement system 1 can thus easily generate data indicating the height of the measurement object 70 at each coordinate from the plurality of images obtained by, for example, linearly rotating the stage 50, without using an external position detection device such as an encoder or a precise transport mechanism such as a robot. In other words, the three-dimensional shape measurement system 1 can illuminate a part of the measurement object 70 with no optical cutting line (shaded part 71) that would be generated when the measurement object 70 is linearly moved only in one direction relative to the line laser light 60, with the line laser light 60 by, for example, linearly rotating the stage 50. The three-dimensional shape measurement system 1 can thus generate data indicating the height of the measurement object 70 at each coordinate from the plurality of images including an image including the optical cutting line using the search marks 40.

Further, the three-dimensional shape measurement system 2 known in the art typically involves calculations for matching between the scale in the direction for linearly moving the measurement object 70 relative to the line laser light 60 and the scale in the direction orthogonal to the movement direction of the stage 50.

In contrast, the three-dimensional shape measurement system 1 according to the embodiment of the present invention calculates, for each image, the coordinate of the object part including the optical cutting line using the search marks 40. This eliminates calculations for matching between the scale in the movement direction and the scale in the direction orthogonal to the movement direction.

The three-dimensional shape measurement system 1 described above will now be described in detail with reference to Fig. 1.

Block Diagram of Three-Dimensional Shape Measurement Device

Fig. 1 is a block diagram showing the main components of the three-dimensional shape measurement device 10, the illumination device 20, and the imaging device 30 included in the three-dimensional shape measurement system 1 according to the first embodiment of the present invention. As shown in Fig. 1, the three-dimensional shape measurement device 10 includes a controller 100, a storage unit 200, and a display 300. The display 300 includes a display area for a screen display to provide information to the user. The display 300 displays various sets of information including characters and images on the screen based on screen data received from a display controller 112. For example, the display 300 displays an image captured by the imaging device 30 (unprocessed image), an image for searching described later, and a range image, which are illustrated in Fig. 2. The display 300 may be, for example, a liquid crystal display (LCD), a plasma display panel (PDP), or an electroluminescence display (EL). The display 300 may be, for example, a touch panel, and may also have an input function. The user can operate the touch panel (display 300) to operate the three-dimensional shape measurement device 10 and the three-dimensional shape measurement system 1. The system may separately include an input operation unit (not shown), such as a key board and a mouse. In this case, the display 300 may not be a touch panel.

Configuration of Controller

The controller 100 centrally controls the functions of the three-dimensional shape measurement device 10. The controller 100 shown in the figure includes, as its functional blocks, an illumination controller 101, an imaging controller 102, an image separation unit 103, a mark search unit 104, a mark registration unit 105, a range profile extraction unit 106, a profile position correction unit 107, a map correction unit 108, a range image memory interpolation unit 109, an inspection and measurement unit 110, an image forming unit 111, and a display controller 112. To implement these functional blocks of the controller 100, for example, a central processing unit (CPU) reads a program stored in a memory device (storage unit 200), such as a read only memory (ROM) or a nonvolatile random access memory (NVRAM), into, for example, a random access memory (RAM) (not shown), and executes the program.

The illumination controller 101 controls the illumination device 20 to control switching on or off of the line laser light 60 and controls the intensity of the line laser light 60. The imaging controller 102 controls the start and the end of an image obtaining process (or an image-capturing process performed by the imaging device 30). Further, the imaging controller 102 obtains data (two-dimensional data) representing the image captured by the imaging device 30 from the imaging device 30, and stores the data into a captured image table 201. The image separation unit 103 separates the two-dimensional data (data representing the image captured by the imaging device 30) stored in the captured image table 201 into data representing an image for range profile extraction and data representing an image for search (image to be searched for a mark 40).

The mark search unit 104 performs a two-dimensional search process (process for detecting a mark 40 from an image and identifying the position of the mark 40) on the image to be searched, and extracts the position (X, Y, θ) and other information of the mark 40 in the image. The mark registration unit 105 registers the mark 40, which is to be detected through the two-dimensional search process, and its reference position P0. More specifically, the mark registration unit 105 stores each mark 40 and its reference position P0 into a mark-reference position table 202.

The range profile extraction unit 106 calculates the height profile for one line based on the image for range profile extraction. More specifically, the range profile extraction unit 106 calculates the height (Z coordinate) of a part of the range profile extraction image including the optical cutting line based on the principle of triangulation.

The profile position correction unit 107 corrects the coordinates (X, Y) of the profile calculated by the range profile extraction unit 106 using the result of the two-dimensional search process performed by the mark search unit 104, and stores the coordinates into a range image table 203. For example, the profile position correction unit 107 corrects the coordinates (X, Y) of an object part of an image including an optical cutting line using the position (X, Y, θ) of the mark 40 in the image, and combines the corrected coordinates (X, Y) with the height (Z coordinate) of the object part calculated by the range profile extraction unit 106, and stores these coordinates into the range image table 203.

The map correction unit 108 corrects (interpolates) the data stored in the range image table 203 by the profile position correction unit 107 using a known image interpolation method. For example, the map correction unit 108 includes the range image memory interpolation unit 109. The range image memory interpolation unit 109 interpolates the data by, for example, filing a data missing point with an average of its adjacent pixels (adjacent pieces of data). The range image memory interpolation unit 109 may perform linear interpolation, N-order curve (curved surface) or spline interpolation, or any other interpolation method.

The inspection and measurement unit 110 performs various processes including inspection and measurement using the data stored in the range image table 203. The various processes including inspection and measurement may be any processes. The image forming unit 111 converts the data stored in the range image table 203 into a grayscale image or a color image, or specifically generates a range image (a group of points) indicating the 3D shape of the measurement object 70, for displaying the image on the display 300. The display controller 112 controls the display 300 to display various pieces of data. As shown in Fig. 2, the display 300 shows a captured image captured by the imaging device 30 (unprocessed image), an image for search (described later), a range image, and the execution results of various processes including inspection and measurement performed by the inspection and measurement unit 110.
Configuration of Storage Unit

The storage unit 200 is a memory for storing various pieces of data used by the three-dimensional shape measurement device 10. The storage unit 200 stores programs that are executed by the controller 100 in the three-dimensional shape measurement device 10 in a non-transitory manner. The programs include (1) a control program, (2) an operating system (OS) program, (3) an application program for the controller 100 to execute the functions of the three-dimensional shape measurement device 10, and (4) various pieces of data to be read when the application program is executed. For example, the programs and data (1) to (4) are stored in a nonvolatile memory, such as a read only memory (ROM), a flash memory, an erasable programmable ROM (EPROM), an electrically erasable programmable ROM (EEPROM, a registered trademark), and a hard disk drive (HDD).

The three-dimensional shape measurement device 10 may include a temporary memory (not shown). The temporary memory is a working memory for temporarily storing data used in computation and the computational results in various processes executed by the three-dimensional shape measurement device 10. The temporary memory may be a volatile memory, such as a random access memory (RAM). A memory, and data stored in the memory are selected as appropriate based on the use of the three-dimensional shape measurement device 10, its convenience, cost, physical constraints, and other factors.

The storage unit 200 further stores the captured image table 201, the mark-reference position table 202, and the range image table 203.

The captured image table 201 stores two-dimensional data obtained by the imaging controller 102 from the imaging device 30. More specifically, the captured image table 201 stores the image data representing the plurality of images each including the optical cutting line formed with the line laser light 60 on the surface of the measurement object 70 and the search mark(s) 40.

The mark-reference position table 202 stores each search mark 40 (or mark part 41) to be detected through the two-dimensional search process (process for detecting a mark 40 from an image and identifying the position of the mark 40), and the reference position P0, which are registered by the mark registration unit 105.

The range image table 203 stores three-dimensional shape information for the measurement object 70. The range image table 203 stores the X coordinate (corresponding to the sub-scanning direction), the Y coordinate (corresponding to the main-scanning direction), and the Z coordinate (corresponding to the height) for identifying a point on the surface of the measurement object 70 in a manner associated with one another. This allows retrieval of the height (Z coordinate) of the measurement object 70 at the X coordinate and the Y coordinate after the measurement.

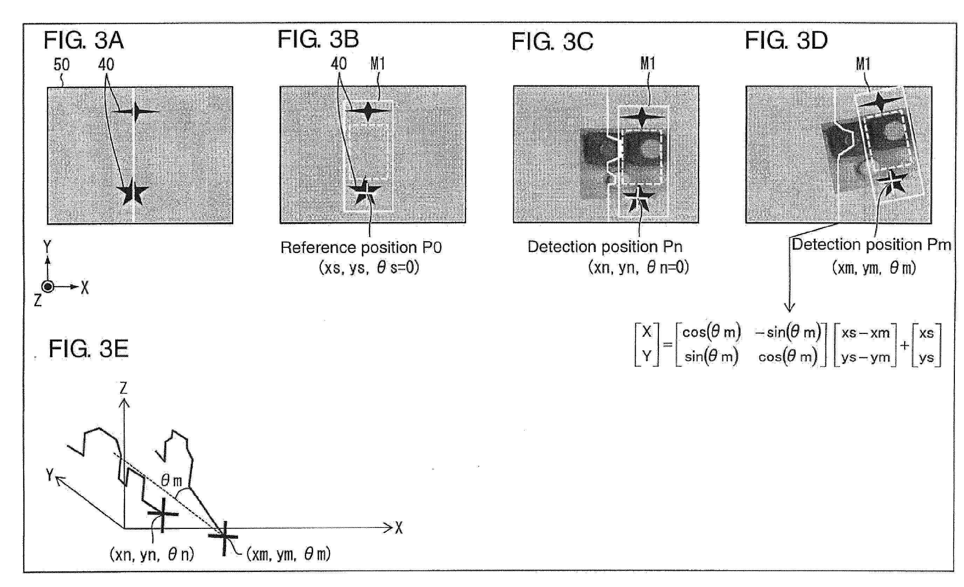

The processing performed by the three-dimensional shape measurement device 10 with the structure described above in detail will now be described with reference to Fig. 3A to Fig. 8B.

Processing of Three-Dimensional Shape Measurement Device

Figs. 3A to 3D are diagrams describing the processing performed by the three-dimensional shape measurement device 10 using the images obtained from the imaging device 30.

As shown in Fig. 3A, the three-dimensional shape measurement device 10 sets a reference state in which the search marks 40 are aligned on the line laser light 60. The three-dimensional shape measurement device 10 uses the imaging device 30 to capture an image of the search marks 40 in the reference state, determines the coordinate position of each search mark 40 in a plane parallel to the stage 50, or specifically the coordinates $(X, Y, \theta)$ of each search mark 40 in the camera coordinate system. More specifically, the mark search unit 104 detects the search marks 40 in the reference state from their images captured by the imaging device 30, and identifies the position of each search mark 40.

As shown in Fig. 3B, the three-dimensional shape measurement device 10 (more specifically, the mark registration unit 105) stores the coordinate position of each search mark 40 in the reference state as a reference position P0 $(X_s, Y_s, \theta_s = 0)$, together with each search mark 40 in the mark-reference position table 202. The mark registration unit 105 may also store (register) a search model M1 in the mark-reference position table 202.

For example, the search model M1 has a frame shape that has an area defined inside the rectangular drawn by a solid line and outside the rectangular drawn by a dotted line in Fig. 3B. The search model M1 has this frame shape shown in Fig. 3B to exclude an image part inside the frame from the search target (from the area to be searched for a search mark 40). This improves the accuracy and the speed for detecting the search marks 40. As shown in Figs. 3A to 3C, for example, when two search marks 40 (a five-pointed star and a four-pointed star) are used, detecting one search mark (e.g., the five-pointed star) will enable easy detection of the other mark (e.g., the four-pointed star) by rotating the search model M1 about the detected mark within the image plane.

The use of the search model M1 also increases the measurement accuracy of the rotation angle $\theta$ of each search mark 40. As a search mark 40 is larger and thinner, the measurement accuracy of its rotation angle $\theta$ is higher. When a search mark 40 is too large, the object part including the optical cutting line (part whose profile is measured) can overlap with the search mark 40. This can lower the detection accuracy of the search mark 40, and also disables easy separation between the object part including the optical cutting line (optical cutting profile) and the search mark 40 (disables easy distinction between the object part and the search mark in the captured image).

The search model M1 with the frame shape is thus used. As shown in Fig. 3B, more specifically, the search model M1 with the frame shape is used, and the search marks 40 with many features are placed at the upper and lower ends of the screen (captured image). The search marks 40 are then detected using the search model M1 with the frame shape, and the central part of the screen is excluded (masked) from the detection target of the search model M1. This improves the separation between the optical cutting profile and the search marks 40, while maintaining the measurement accuracy of the rotation angle $\theta$ of each search mark 40.

After registering each search mark 40, the reference position P0 $(X_s, Y_s, \theta_s = 0)$, and the search model M1, the three-dimensional shape measurement device 10 places the measurement object 70 on the stage 50, and starts measuring the 3D shape of the measurement object 70.

For the images shown in Figs. 3C and 3D, the three-dimensional shape measurement device 10 (more specifically, the mark search unit 104) identifies the detection position Pn and other information $(X_n, Y_n, \theta_n)$ of each search mark 40. The profile position correction unit 107 then calculates, for each image, the position of the object part including the optical cutting line through an affine transformation using the detection position Pn and other information identified by the mark search unit 104. For example, the coordinates $(X, Y)$ of the object part including the optical cutting line in the plane parallel to the stage 50 in an image including the search marks 40 with the detection position Pm and other information written as the coordinates $(X_m, Y_m, \theta_m)$ are calculated using the formula below.

Formula 1

$$\begin{bmatrix} X \\ Y \end{bmatrix} = \begin{bmatrix} \cos(\theta m) & -\sin(\theta m) \\ \sin(\theta m) & \cos(\theta m) \end{bmatrix} \begin{bmatrix} xs - xm \\ ys - ym \end{bmatrix} + \begin{bmatrix} xs \\ ys \end{bmatrix}$$

More specifically, the mark search unit 104 calculates the displacement of the stage 50 based on a deviation of the detection position Pn (Xn, Yn, θn) of each search mark 40 in X-direction and Y-direction from the reference position P0, and calculates a deviation angle in the angular direction based on the rotation angle θ (two-dimensional search process).

Further, the range profile extraction unit 106 in the three-dimensional shape measurement device 10 calculates the height profile corresponding to one line from the images shown in Figs. 3C and 3D. For the images including the detection position Pm and other information of each search mark 40 written as the coordinates (Xm, Ym, θm), for example, the height (Z coordinate) of the object part including the optical cutting line in each image is calculated based on the principle of triangulation (profile calculation process).

The profile position correction unit 107 in the three-dimensional shape measurement device 10 translates and rotates the obtained position corresponding to one line (the position of the object part including the optical cutting line) using the displacement and the deviation angle calculated by the mark search unit 104, and stores the resultant data into the range image table 203. Fig. 3E is a diagram showing an image of the profile (height information for the object part including the optical cutting line) corrected using the result of the two-dimensional search process.

More specifically, the mark registration unit 105 presto res the position of the search mark 40 detected and identified by the mark search unit 104 from the image including the search mark 40 into the reference position table 202 as the reference position P0. Further, the mark search unit 104 detects the search mark 40 from each of the images of the measurement object 70 (images each including the search mark 40 and the part of the measurement object 70 including the optical cutting line), while moving the stage 50. The profile position correction unit 107 calculates the coordinates (X, Y) of the part of the measurement object 70 including the optical cutting line in each image based on the parallel displacement and/or the rotational displacement of the detection position Pn of the search mark 40 detected by the mark search unit 104 from the reference position P0.

More specifically, the three-dimensional shape measurement device 10 can calculate the coordinates (X, Y) of the part of the measurement object 70 including the optical cutting line in each image based on the displacement of the detection position Pn of the search mark 40 from the reference position P0, without using an encoder or other devices, and can generate data indicating the height (Z) of the measurement object 70 at the coordinates (X, Y).

The reference position P0 (Xs, Ys, θs = 0) is used as the central position in an affine transformation of the X coordinate and the Y coordinate of the profile. To generate an internal table for trigonometrical functions in a convenient manner, the value θs is set to 0. Although the value θs may not be set to 0, the value θs set to 0 can reduce computations and save memory.

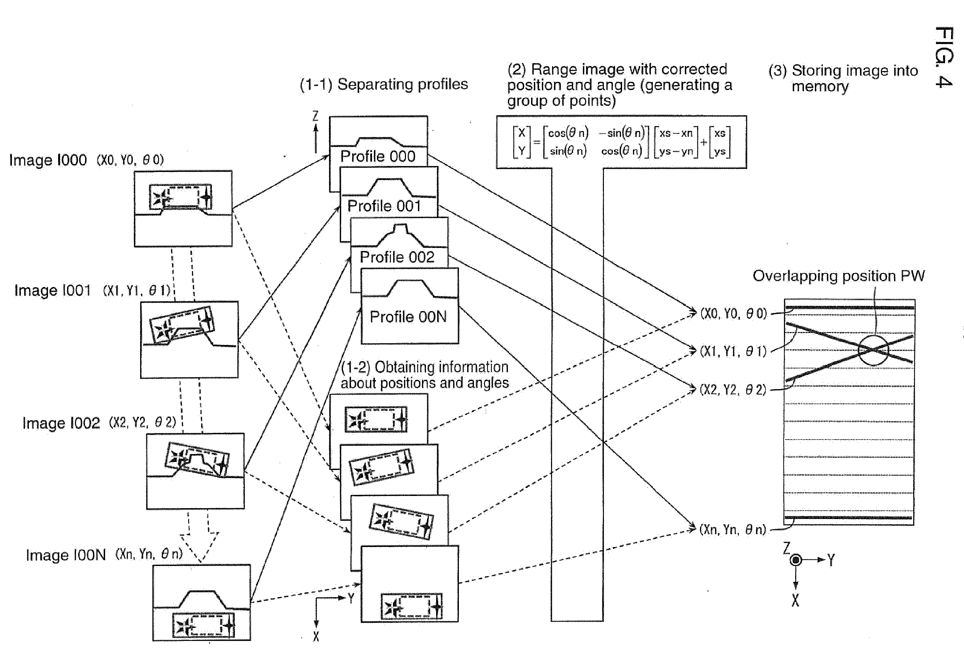

Fig. 4 is a diagram describing the processing performed by the three-dimensional shape measurement device 10 for images obtained from the imaging device 30.

The image separation unit 103 in the three-dimensional shape measurement device 10 separates the plurality of images (images I000, I001, 1002, and to I00N) captured by the imaging device 30 into images for range profile extraction (1-1) and images for searching (1-2).

The range profile extraction unit 106 then subjects each of the images for range profile extraction (1-1) to the profile calculation process to separate (extract) the profile (height information for the object part including the optical cutting line).

The mark search unit 104 subjects each of the images for searching (1-2) to the two-dimensional search process to calculate the displacement of the stage 50 based on the deviation of the detection position Pn (Xn, Yn, θn) of the search mark 40 in X-direction and Y-direction from the reference position P0, and calculates the deviation angle in the anglular direction based on the rotation angle θ.

The profile position correction unit 107 uses the displacement and the deviation angle calculated by the mark search unit 104 to correct the position and the angle of the object part corresponding to one line (the object part including the optical cutting line) for which the height is calculated by the range profile extraction unit 106 (affine transformation). The profile position correction unit 107 generates a range image (a group of points) resulting from the correction ((2) in Fig. 4), and stores the corrected range image into the range image table 203 ((3) in Fig. 4).

As shown in process (3) in Fig. 4, the profile for one line obtained from the image I001 (X1, Y1, θ1) (for the object part including the optical cutting line) and the profile for one line obtained from the image I002 (X2, Y2, θ2) may overlap at some positions (overlapping position PW). Whether to use the profile calculated from the image I001 or the profile calculated from the image I002 at the overlapping position PW may be determined in the manner described below. The profile calculated from the image I002 may be used as the profile at the overlapping position PW by simple overwriting. When the luminance of the optical cutting line included in the image 1002 is higher than the luminance of the optical cutting line included in the image I001, the profile calculated from the image 1002 may be used. When the luminance of the optical cutting line in the image 1002 is lower than that in the image I001, the profile calculated from the image I001 may be used. Instead, the area that has already been positioned may not be positioned again. In other words, the profile calculated from the image 1002 may not be used as the profile at the overlapping position PW, and the profile calculated from the image I001 maybe used.

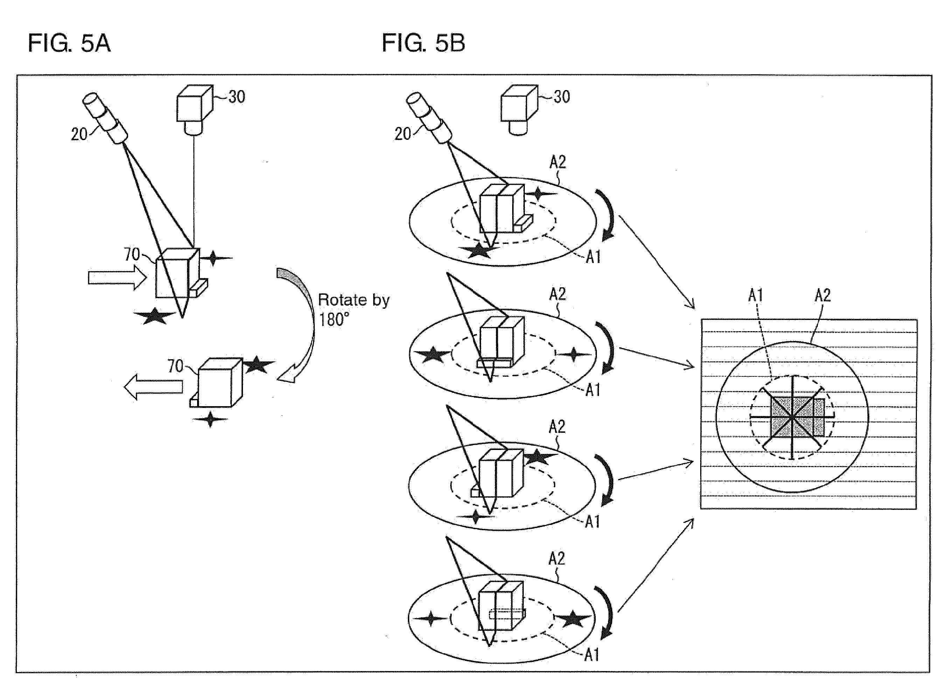

Figs. 5A and 5B are diagrams describing a method used by the three-dimensional shape measurement device 10 to obtain an image without the shaded part 71 of the measurement object 70 (part not illuminated with linear light applied from the illumination device 20).

As described with reference to Fig. 11, the three-dimensional shape measurement system 2 known in the art linearly moves the measurement object 70 only in one direction (the sub-scanning direction, that is X-direction) relative to the line laser light 60. This generates the shaded part 71 (part with no optical cutting line), which cannot undergo the profile calculation process.

The three-dimensional shape measurement system 2 known in the art identifies the position of the optical cutting line using the encoder 500. When the measurement object 70 is linearly rotated relative to the line laser light 60, identifying the position of the optical cutting line can be extremely difficult with the three-dimensional shape measurement system 2 known in the art.

In contrast, the three-dimensional shape measurement device 10 identifies the position of the optical cutting line without using the encoder 500 or other devices, and thus can easily identify the position of the optical cutting line from the image captured after linearly rotating the measurement object 70 relative to the line laser light 60. More specifically, the three-dimensional shape measurement device 10 can identify the position of the optical cutting line from the captured image of the shaded part 71 illuminated with the line laser light 60, after linearly rotating the measurement object 70 relative to the line laser light 60. Thus, the three-dimensional shape measurement device 10 can also apply the line laser light 60 to the shaded part 71, which would not be illuminated with the line laser light 60 when the measurement object 70 is linearly moved only in one direction. The three-dimensional shape measurement device 10 can calculate the profile of the shaded part 71.

For example, as shown in Fig. 5A, the three-dimensional shape measurement device 10 captures images of the measurement object 70 while first linearly moving the measurement object 70 in one direction relative to the line laser light 60, and then rotating the measurement object 70 by 180 degrees in the plane parallel to the stage 50. After rotating the measurement object 70, the three-dimensional shape measurement device 10 captures images of the measurement object 70 while linearly moving the measurement object 70 in the reversed direction. In other words, the three-dimensional shape measurement device 10 positions the measurement object 70 again in the direction to allow its part 71 that would be shaded when the measurement object 70 is linearly moved only in one direction to receive the line laser light 60 (to illuminate the shaded part with the line laser light 60). In this manner, the three-dimensional shape measurement device 10 performs the two-dimensional search process to identify the position of the optical cutting line from each of the images obtained without using the encoder 500 or other devices.

Similarly, as shown in Fig. 5B, the three-dimensional shape measurement device 10 also allows the part 71 that would be shaded when the measurement object 70 is linearly moved only in one direction to receive the line laser light 60 by linearly rotating the measurement object 70 under the line laser light 60, and can obtain an image of the part 71 illuminated with the line laser light 60 (an image including the optical cutting line). Thus, the three-dimensional shape measurement device 10 can also calculate the profile of the shaded part 71 by illuminating the shaded part 71 with the line laser light 60.

More specifically, the three-dimensional shape measurement device 10 can easily calculate the profile of the object part that cannot be calculated when the measurement object 70 is simply moved linearly in one direction relative to the line laser light 60. The three-dimensional shape measurement device 10 can thus generate an accurate range image of the measurement object 70.

Further, the three-dimensional shape measurement device 10 performs the two-dimensional search process using the search mark 40 and identifies the position of the optical cutting line. Thus, the three-dimensional shape measurement device 10 can calculate the profile of the shaded part 71 using the plurality of images obtained while linearly rotating the measurement object 70 placed on a turntable, without the turntable precisely defining a linear plane and an installation position.

Search Marks

Figs. 6A to 6D are diagrams showing examples of search marks 40 (mark part 41) used by the three-dimensional shape measurement device 10. Figs. 6A to 6C each show one or more example search marks 40 formed on the stage 50. As shown in Figs. 6A to 6C, each search mark 40 may have any asymmetrical shape whose position relative to the measurement object 70 is unchanged and that can be detected through the two-dimensional search process, and that further allows its coordinates $(X, Y, \theta)$ in the plane parallel to the stage 50 to be determined uniquely.

Fig. 6D is a drawing showing an example of the mark part 41 included in the measurement object 70. The mark part 41 can be used as one or more search marks 40. The three-dimensional shape measurement device 10 may use the mark part 41 included in the measurement object 70 as the search marks 40. In this case, the three-dimensional shape measurement device 10 can generate, for each image, data indicating the height of the measurement object 70 at each coordinate using the search marks 40 included in the measurement object 70. The three-dimensional shape measurement device 10 can thus calculate the position of the object part including the optical cutting line formed with the line laser light 60 (linear light) in each image using the search marks 40 included in the measurement object 70 without using an encoder or other devices, and can generate data indicating the height of the measurement object 70 at each coordinate.

The mark part 41 is included in the measurement object 70, and has an asymmetrical shape whose position relative to the measurement object 70 is unchanged. More specifically, the mark part 41 included in the measurement object 70 is asymmetrical with respect to the measurement object 70 in the plane parallel to the stage 50.

Method for Separating Mark and Optical Cutting Line

As described above, each of the images (images I000, I001, 1002, and to I00N) captured by the imaging device 30 includes one or more asymmetrical search marks 40 (reference marks) whose positions relative to the measurement object 70 are unchanged and the optical cutting line formed with the line laser light 60 on the surface of the measurement object 70. The image separation unit 103 separates each of the images into images for range profile extraction each including one or more search marks 40 and images for searching each including the optical cutting line.

The image separation unit 103 separates the search mark(s) 40 and the optical cutting line in each of the images in accordance with the features of the measurement object 70 with at least one of the methods described below. More specifically, the image separation unit 103 separates the search mark 40 and the optical cutting line with at least one of separation using colors, separation using polarized light (these two methods are collectively referred to as an optical separation method), and spatial separation for separating the position at which the search mark 40 is detected and the position at which the profile (optical cutting line) is obtained.

The separation using colors uses different colors for the search mark 40 and for the line laser light 60. In this structure, the search mark 40 is colored differently from the line laser light 60. The three-dimensional shape measurement device 10 can accurately distinguish the search mark 40 from the optical cutting line formed with the line laser light 60 on the surface of the measurement object 70 in each image. Thus, the three-dimensional shape measurement device 10 can accurately calculate the height of the object part including the optical cutting line accurately distinguishable from the search mark 40, and can accurately calculate the coordinate of the above object part using the search mark 40 accurately distinguishable from the line laser light 60.

The separation using polarized light refers to separation using polarized light as the line laser light 60. In the above structure, the line laser light 60 is the polarized light. The three-dimensional shape measurement device 10 can accurately distinguish the search marks 40 that reflect natural light and the optical cutting line formed with the polarized light as the line laser light 60 on the surface of the measurement object 70 in each image. Thus, the three-dimensional shape measurement device 10 can accurately calculate the height of the object part including the optical cutting line accurately distinguishable from the search marks 40, and can accurately calculate the coordinate of the above object part using the search marks 40 accurately distinguishable from the line laser light 60.

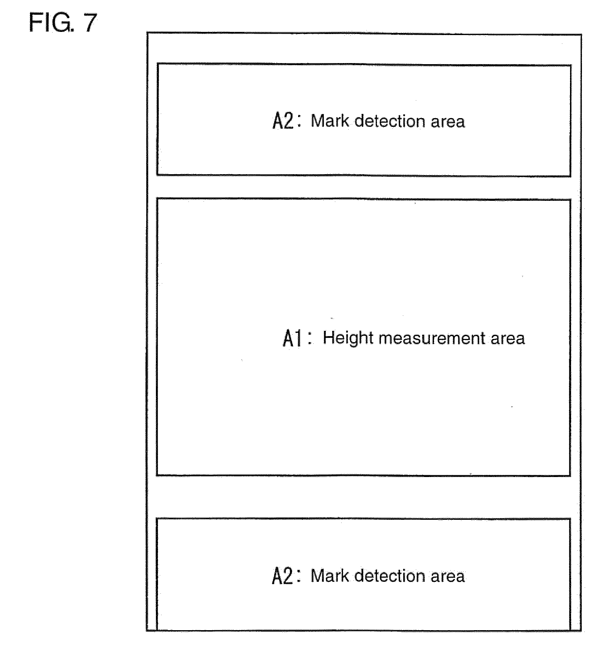

The spatial separation used by the image separation unit 103 to separate the search mark 40 and the optical cutting line will be described with reference to Fig. 7. The spatial separation will now be described briefly. The mark search unit 104 in the three-dimensional shape measurement device 10 searches a predetermined area that is a part of each image to detect the search mark 40 included in each image. In each image, an area including the search mark 40 and an area including the above object part are spatially separate from each other. The three-dimensional shape measurement device 10 searches the predetermined area to detect the search mark 40 and thus can improve the accuracy and the speed for detecting the search mark 40. More specifically, for each of the images (images I000, I001, I002, and to I00N), the image separation unit 103 with the spatial separation separates, in advance, the position at which the search mark 40 is to be detected and the position at which the profile (optical cutting line) is to be obtained.

Fig. 7 is a diagram describing a method used by the three-dimensional shape measurement device 10 to detect the search marks 40 from the image obtained by the imaging device 30. As shown in Fig.7, the image separation unit 103 separates the measurement area of each of the images (images I000, I001, 1002, and to I00N) into a height measurement area A1 and a mark detection area A2. The mark search unit 104 searches the mark detection area A2 of each image to detect and identify the search mark 40. The mark search unit 104 searches only the mark detection area A2 to detect the search mark 40. This improves the accuracy and the processing speed of the two-dimensional search process.

Processing by Three-Dimensional Shape Measurement Device

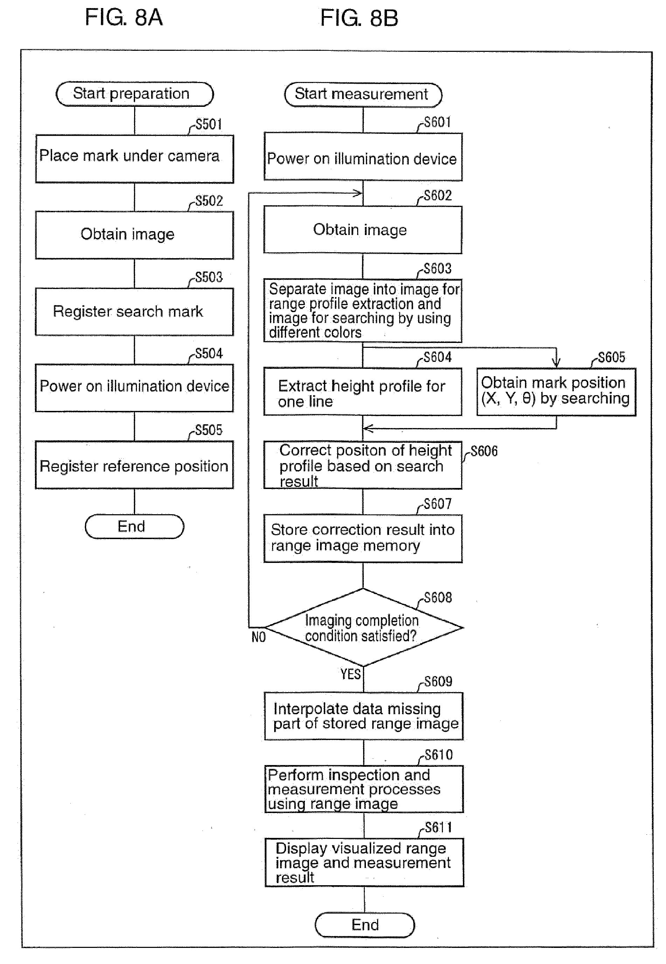

Figs. 8A and 8B are flowcharts showing the processing performed by the three-dimensional shape measurement device 10. As shown in Fig. 8A, the three-dimensional shape measurement device 10 places the search mark 40 under the imaging device 30 (camera) (S501), and obtains an image of the search mark 40 (S502) with the illumination device 20 being off. The mark search unit 104 detects the search mark 40 from the image obtained in S502, and the mark registration unit 105 registers (stores) the detected search mark 40 into the mark-reference position table 202 (S503).

After the illumination controller 101 powers on the illumination device 20 (S504), the mark registration unit 105 registers (stores), in advance, the position of the search mark 40 detected and identified by the mark search unit 104 in the image including the search mark 40 into the mark-reference position table 202 as the reference position P0.

The processing from S501 to S505 corresponds to the processing shown in Figs. 3A and 3B. As shown in Fig. 3A, the search marks 40 are aligned on the line laser light (arranged in the reference state). In this state, the reference position P0 is registered as shown in Fig. 3B.

The processing in S501 to S505 assumes in advance that each search mark 40 is constantly within the field of view (within the imaging range of the imaging device 30). Each search mark 40 is assumed to be constantly within the field of view when the workpiece as the measurement object moves within the screen and the entire measurement range can be measured.

More specifically, after the user verifies that the entire range of the workpiece can be measured (allowing the optical cutting line to pass through) and the search mark 40 is constantly within the field of view (positions can be measured) in that range, the search mark 40 and the reference position P0 are registered. For example, the camera position and/or the lens may be adjusted to allow the entire range of the workpiece and the search mark 40 to be within the field of view. The user may perform the verification and adjustment operation in advance while viewing an image appearing on the display 300, and may perform the registration process. The user can perform the on/off operation of the illumination device, a verification operation associated with the registration, or other operations with the touch panel or the input operation unit (not shown) of the display 300. In place of the above operations performed by the user, the processing that can be automated may be performed automatically by the three-dimensional shape measurement device 10. The processing corresponding to Figs. 3C and 3D will now be described in detail with reference to Fig. 8B.

After the illumination controller 101 in the three-dimensional shape measurement device 10 powers on the illumination device 20 (S601), the imaging controller 102 controls the imaging device 30 to capture an image including the optical cutting line formed with the line laser light 60 on the surface of the measurement object 70 and the search mark 40, and receives the captured image from the imaging device 30 (S602). The image separation unit 103 separates the image captured by the imaging device 30 into an image for range profile extraction and an image for searching by using different colors between the search mark 40 and the line laser light 60 (S603).

The range profile extraction unit 106 calculates the height profile for one line from the image for range profile extraction (S604). More specifically, the range profile extraction unit 106 calculates the height (Z coordinate) of the object part including the optical cutting line in the image for range profile extraction (profile calculation process).

The mark search unit 104 uses the image for searching and obtains, by searching, the mark position and other information $(X_n, Y_n, \theta_n)$, which is the detection position $P_n$ and other information $(X_n, Y_n, \theta_n)$ of the search mark 40 (S605), and identifies the detection position $P_n$ $(X_n, Y_n, \theta_n)$ (two-dimensional search process).

The profile position correction unit 107 corrects the position (more specifically, the coordinates $(X, Y)$) of the height profile calculated in S604 (more precisely, the object part including the optical cutting line) based on the search result obtained in S605 (more specifically, the detection position $P_n$ and other information $(X_n, Y_n, \theta_n)$) (S606). More specifically, the profile position correction unit 107 calculates the position of the object part including the optical cutting line using the detection position $P_n$ and other information identified by the mark search unit 104 through an affine transformation. The profile position correction unit 107 then stores the correction result into the range image memory (range image table 203) (S607).

The three-dimensional shape measurement device 10 determines whether the imaging completion condition is satisfied (S608). The process for determining whether the imaging completion condition is satisfied will be described later. When determining that the imaging completion condition is not satisfied (No in S608), the three-dimensional shape measurement device 10 returns to S602 and repeats the process. More specifically, for example, after the stage 50 is moved, the imaging controller 102 controls the imaging device 30 to capture an image including the optical cutting line formed with the line laser light 60 on the surface of the measurement object 70 and the search mark 40, and receives the captured image from the imaging device 30. The three-dimensional shape measurement device 10 then performs the profile calculation process and the two-dimensional search process of the received image.

When determining that the imaging completion condition is satisfied (Yes in S608), the range image memory interpolation unit 109 interpolates a data missing part of the range image stored in the range image table 203 (S609). The inspection and measurement unit 110 performs inspection and measurement processes using the range image (S610). The display controller 112 (and the image forming unit 111) displays the visualized range image and the measurement result on the display 300 (S611).

The three-dimensional shape measurement method implemented by the three-dimensional shape measurement device 10 described above with reference to Figs. 8A and 8B will now be summarized. The three-dimensional shape measurement method implemented by the three-dimensional shape measurement device 10 includes an obtaining step (S602) for obtaining a plurality of captured images each including an optical cutting line formed with the line laser light 60 on the surface of the measurement object 70 placed on the stage 50 and asymmetrical search marks 40 whose positions relative to the measurement object 70 are unchanged, a height calculation step (S604) for calculating the height of the part of the measurement object 70 including the optical cutting line from the stage 50, a coordinate calculation step (S605) for calculating, for each image, the coordinate of the object part in the plane parallel to the stage 50 using the search marks 40, and map generation steps (S606 and S607) for combining the height calculated for each image with the coordinate to generate data indicating the height of the measurement object 70 at each coordinate.

The above three-dimensional shape measurement method is used to calculate, for each image, the coordinate of the object part including the optical cutting line using the search marks 40, combine the calculated coordinate with the height of the object part, and generate data indicating the height of the measurement object 70 at each coordinate. The three-dimensional shape measurement method can thus be used to calculate the position of the above object part without using an external position detection device such as an encoder or a precise transport mechanism such as a robot, and to generate data indicating the height of the measurement object 70 at each coordinate. The three-dimensional shape measurement method enables precise measurement of the 3D shape of the measurement object 70.

Further, the three-dimensional shape measurement method is used to obtain the plurality of images each including a different optical cutting line. The three-dimensional shape measurement method can be used to accurately calculate the coordinate of the above object part using the search marks 40 when, for example, the stage 50 on which the measurement object 70 is placed can deviate in its linear movement. More specifically, the three-dimensional shape measurement method can be used to generate data indicating the height of the measurement object 70 at each coordinate using the search marks 40 when the stage 50 with the measurement object 70 is moved with the method that can cause deviations, or for example when the stage 50 is moved manually.

A three-dimensional shape measurement method known in the art includes linearly moving the measurement object 70 only in one direction relative to the line laser light 60, and may have the shaded part 71 that is not illuminated with the line laser light 60 (part with no optical cutting line). To illuminate the shaded part 71 (part with no optical cutting line) with the line laser light 60, for example, the measurement object 70 may be linearly rotated relative to the line laser light 60. However, when the measurement object 70 is linearly rotated relative to the line laser light 60, the position of the optical cutting line formed with the line laser light 60 on the surface of the measurement object 70 is even more difficult to determine than the position of the optical cutting line in the measurement object 70 moved linearly in one direction relative to the line laser light 60.

In contrast, the three-dimensional shape measurement method according to the embodiment of the present invention is used to calculate the position of the above object part using the search marks 40. The three-dimensional shape measurement method can thus be used to easily generate data indicating the height of the measurement object 70 at each coordinate from the plurality of images obtained by, for example, linearly rotating the stage 50, without using an external position detection device such as an encoder or a precise transport mechanism such as a robot. In other words, the three-dimensional shape measurement method can be used to illuminate the part with no optical cutting line (shaded part 71) when the measurement object 70 is linearly moved only in one direction relative to the line laser light 60, with the line laser light 60 by, for example, linearly rotating the stage 50, and to generate, using the search marks 40, data indicating the height of the measurement object 70 at each coordinate from the plurality of images including an image including the optical cutting line.

Further, the three-dimensional shape measurement method known in the art typically involves calculations for matching between the scale in the direction for linearly moving the measurement object 70 relative to the line laser light 60 and the scale in the direction orthogonal to the movement direction of the stage 50.

In contrast, the three-dimensional shape measurement method according to the embodiment of the present invention is used to calculate, for each image, the coordinate of the object part including the optical cutting line using the search marks 40. This eliminates calculations for matching between the scale in the movement direction and the scale in the direction orthogonal to the movement direction.

Method for Determining Imaging Completion

The three-dimensional shape measurement device 10 can determine whether the imaging completion condition is satisfied with the method described below. First, the three-dimensional shape measurement device 10 may determine that the imaging completion condition is satisfied when a search mark 40 is not within a predetermined area in an image captured by the imaging device 30 including an optical cutting line formed with the line laser light 60 on the surface of the measurement object 70 and the search mark 40. For example, the three-dimensional shape measurement device 10 may determine that the imaging completion condition is satisfied when determining that the detection position Pn of the search mark 40 is outside a predetermined position predefined for this image.

When the fulfillment rate of the obtained pixels for the range image of the measurement object 70 exceeds a predetermined value, or when, for example, the capacity of memory used for the range image of the measurement object 70 in the range image table 203 exceeds a predetermined value, the three-dimensional shape measurement device 10 may determine that the imaging completion condition is satisfied.

Further, when the search mark 40 in the above image moves out of the mark detection area A2 shown in Fig. 7, or more specifically when the search mark 40 becomes undetectable in the mark detection area A2, the three-dimensional shape measurement device 10 may determine that the imaging completion condition is satisfied.

Advantageous Effects of the Present Invention

For each of the images, the three-dimensional shape measurement device 10 performs the two-dimensional search process for the search mark 40, and identifies the detection position Pn and other information $(Xn, Yn, \theta n)$ of the search mark 40, and calculates the displacement of the stage 50, or the coordinates $(X, Y)$ of the optical cutting line formed with the line laser light 60 on the surface of the measurement object 70. The three-dimensional shape measurement device 10 further calculates the Z coordinate (line laser light profile) of the object part including the optical cutting line based on the principle of triangulation. The three-dimensional shape measurement device 10 then combines, for each of the images, the coordinates $(X, Y)$ of the optical cutting line calculated using the search mark 40 with the Z coordinate of the object part including the optical cutting line, which is calculated based on the principle of triangulation, to generate a range image (a group of points) of the measurement object 70.

Thus, the three-dimensional shape measurement device 10 can generate a range image (a group of points) of the measurement object 70 without using a precise position detection mechanism (transport mechanism) such as the encoder 500. In other words, the three-dimensional shape measurement device 10 can generate the range image using the search mark 40 included in each of the obtained images. The three-dimensional shape measurement device 10 can use a part of the measurement object 70 (e.g., the mark part 41) as the search mark 40. The three-dimensional shape measurement device 10 calculates the coordinates $(X, Y)$ of the optical cutting line (performs corrections in X-direction, Y-direction, and $\theta$-direction) using the search mark 40. Thus, the three-dimensional shape measurement device 10 can accurately generate a range image (a group of points) when the transport mechanism of the stage 50 (which may be operated manually) deviates. As described with reference to Figs. 5A and 5B, the three-dimensional shape measurement device 10 allows the shaded part 71, which is not illuminated with the line laser light 60 when the measurement object 70 is linearly moved only in one direction, to receive the line laser light 60 and obtain an image of the part 71 illuminated with the line laser light 60, and thus can calculate the profile of the shaded part 71. The three-dimensional shape measurement device 10 performs positioning (calculates the coordinates

$(X, Y)$ of the optical cutting line) for each image. This eliminates matching between the scales for the X axis and the Y axis, which is performed in the three-dimensional shape measurement system 2 known in the art. The three-dimensional shape measurement device 10 that does not use the mechanical transport mechanism, such as the conveyor 600 in the three-dimensional shape measurement system 2 known in the art, allows the user to manually move the measurement object 70 under the imaging device 30 (like in, for example, bar code scanning). Further, the three-dimensional shape measurement device 10 can simultaneously perform a two-dimensional inspection (e.g., an inspection of an unprocessed image shown in Fig. 2) and a three-dimensional inspection (e.g., an inspection of a range image shown in Fig. 2) using the single imaging device 30 (camera).

Second Embodiment

Each functional block of the three-dimensional shape measurement device 10 (in particular, the illumination controller 101, the imaging controller 102, the image separation unit 103, the mark search unit 104, the mark registration unit 105, the range profile extraction unit 106, the profile position correction unit 107, the map correction unit 108, the range image memory interpolation unit 109, the inspection and measurement unit 110, the image forming unit 111, and the display controller 112) may be implemented using a logic circuit (hardware), such as an integrated circuit (IC chip), or using software implemented by a central processing unit (CPU).

When the functional blocks are implemented using software, the three-dimensional shape measurement device 10 includes a CPU, which executes instructions included in a program or software to implement these functions, a read only memory (ROM) or a memory device (these are referred to as storage mediums), which stores the program and various pieces of data readable by a computer (or by the CPU), and a random access memory (RAM), into which the program is expanded. The computer (or CPU) reads the program from the storage medium, and executes the program to achieve one or more aspects of the present invention. The storage medium may be a non-transitory tangible medium, such as a tape, a disk, a card, a semiconductor memory, a programmable logic circuit. The program may be provided via any transmission medium that can transmit the program to the computer (such as a communication network or a broadcast wave). One or more embodiments of the present invention may be implemented using programs that are electrically transmitted in the form of data signals carried by carrier waves.

The embodiments disclosed herein should not be construed to be restrictive, but may be modified within the spirit and scope of the claimed invention. The technical features disclosed in different embodiments may be combined in other embodiments within the technical scope of the invention.

REFERENCE SIGNS LIST

| | |
|---|---|
| 1 | three-dimensional shape measurement system |
| 10 | three-dimensional shape measurement device |
| 20 | illumination device |
| 30 | imaging device |
| 40 | search mark (reference mark) |
| 50 | stage (reference surface) |
| 60 | line laser light (linear light) |
| 70 | measurement object |
| 102 | imaging controller (image obtaining unit) |
| 104 | mark search unit (coordinate calculation unit) |
| 106 | range profile extraction unit (height calculation unit) |
| 107 | profile position correction unit (map generator) |
| A2 | mark detection area (predetermined area that is a part of an image) |
| P0 | reference position |

**Claims**

1.  A three-dimensional shape measurement device, comprising:

    an image obtaining unit configured to obtain a plurality of captured images each including an optical cutting line and a reference mark, the optical cutting line being a line formed with linear light on a surface of a measurement object placed on a reference surface, the reference mark being an asymmetrical mark whose position relative to the measurement object is unchanged;
    a height calculation unit configured to calculate, for each image, a height of a part of the measurement object including the optical cutting line from the reference surface;
    a coordinate calculation unit configured to calculate, for each image, a coordinate of the part in a plane parallel to the reference surface using the reference mark; and
    a map generator configured to combine the height calculated for each image with the coordinate to generate data indicating the height of the measurement object at the coordinate obtained for each image.

2.  The three-dimensional shape measurement device according to claim 1, wherein
    the coordinate calculation unit prestores, as a reference position, a position of the reference mark in a captured image including the reference mark, and calculates, for each image, the coordinate of the part based on a parallel displacement and/or a rotational displacement of the position of the reference mark from the reference position in each image.

3.  The three-dimensional shape measurement device according to claim 1 or claim 2, wherein
    the reference mark is on the reference surface.

4.  The three-dimensional shape measurement device according to claim 1 or claim 2, wherein
    the reference mark is included in the measurement object.

5.  The three-dimensional shape measurement device according to any one of claims 1 to 4, wherein
    the reference mark has a color different from a color of the linear light.

6.  The three-dimensional shape measurement device according to any one of claims 1 to 5, wherein
    the linear light is polarized light.

7.  The three-dimensional shape measurement device according to any one of claims 1 to 6, wherein
    the coordinate calculation unit searches a predetermined area that is a part of each image to detect the reference mark included in each image.

8.  A three-dimensional shape measurement system, comprising:

an illumination device configured to apply linear light to a measurement object placed on a reference surface;

an imaging device configured to obtain a plurality of captured images each including an optical cutting line and a reference mark, the optical cutting line being a line formed with the linear light applied by the illumination device on a surface of the measurement object, the reference mark being an asymmetrical mark whose position relative to the measurement object is unchanged; and

a three-dimensional shape measurement device configured to calculate, for each image obtained by the imaging device, a height of a part of the measurement object including the optical cutting line from the reference surface, calculate a coordinate of the part in a plane parallel to the reference surface using the reference mark, and combine the height with the coordinate to generate data indicating the height of the measurement object at the coordinate obtained for each image.

9. A three-dimensional shape measurement method, comprising:

obtaining a plurality of captured images each including an optical cutting line and a reference mark, the optical cutting line being a line formed with linear light on a surface of a measurement object placed on a reference surface, the reference mark being an asymmetrical mark whose position relative to the measurement object is unchanged;

calculating, for each image, a height of a part of the measurement object including the optical cutting line from the reference surface;

calculating, for each image, a coordinate of the part in a plane parallel to the reference surface using the reference mark; and

combining the height calculated for each image with the coordinate to generate data indicating the height of the measurement object at the coordinate obtained for each image.

10. An information processing program causing a computer to function as the units of the three-dimensional shape measurement device according to any one of claims 1 to 7.

11. A non-transitory computer-readable storage medium storing the information processing program according to claim 10.

FIG. 1

1: Three-dimensional shape measurement system

**Three-dimensional shape measurement device** (10)

Illumination device (20)

Imaging device (camera) (30)

**Controller** (100)

Illumination controller (101)

Imaging controller (102)

Range profile extraction unit (106)

**Storage unit** (200)

Captured image table (201)

Image separation unit (103)

Mark search unit (104)

Profile position correction unit (107)

Mark-reference position table (202)

Mark registration unit (105)

Range image table (203)

Inspection and measurement unit (110)

Display controller (112)

Display (300)

Image forming unit (111)

Map correction unit (108)

Range image memory interpolation unit (109)

EP 3 163 252 A1

FIG. 2

Unprocessed image

Range image

Search result

FIG. 3A

50  40

FIG. 3B

40  M1

Reference position P0
(xs, ys, $\theta s=0$)

FIG. 3C

M1

Detection position Pn
(xn, yn, $\theta n=0$)

FIG. 3D

M1

Detection position Pm
(xm, ym, $\theta m$)

$$\begin{bmatrix} X \\ Y \end{bmatrix} = \begin{bmatrix} \cos(\theta m) & -\sin(\theta m) \\ \sin(\theta m) & \cos(\theta m) \end{bmatrix} \begin{bmatrix} xs - xm \\ ys - ym \end{bmatrix} + \begin{bmatrix} xs \\ ys \end{bmatrix}$$

FIG. 3E

$\theta m$

(xn, yn, $\theta n$)   (xm, ym, $\theta m$)

EP 3 163 252 A1

FIG. 4

(1-1) Separating profiles

(2) Range image with corrected position and angle (generating a group of points)

(3) Storing image into memory

$$\begin{bmatrix} X \\ Y \end{bmatrix} = \begin{bmatrix} \cos(\theta n) & -\sin(\theta n) \\ \sin(\theta n) & \cos(\theta n) \end{bmatrix} \begin{bmatrix} xs - xn \\ ys - yn \end{bmatrix} + \begin{bmatrix} xs \\ ys \end{bmatrix}$$

Image I000 ($X0$, $Y0$, $\theta 0$)

Image I001 ($X1$, $Y1$, $\theta 1$)

Image I002 ($X2$, $Y2$, $\theta 2$)

Image I00N ($Xn$, $Yn$, $\theta n$)

Profile 000
Profile 001
Profile 002
Profile 00N

(1-2) Obtaining information about positions and angles

Overlapping position PW

($X0$, $Y0$, $\theta 0$)
($X1$, $Y1$, $\theta 1$)
($X2$, $Y2$, $\theta 2$)
($Xn$, $Yn$, $\theta n$)

# FIG. 6A
40a

# FIG. 6B
40b

# FIG. 6C
40c

# FIG. 6D

FIG. 7

A2: Mark detection area

A1: Height measurement area

A2: Mark detection area

# FIG. 8A

Start preparation

**S501**
Place mark under camera

**S502**
Obtain image

**S503**
Register search mark

**S504**
Power on illumination device

**S505**
Register reference position

End

# FIG. 8B

Start measurement

**S601**
Power on illumination device

**S602**
Obtain image

**S603**
Separate image into image for range profile extraction and image for searching by using different colors

**S604**
Extract height profile for one line

**S605**
Obtain mark position (X, Y, θ) by searching

**S606**
Correct positon of height profile based on search result

**S607**
Store correction result into range image memory

**S608**
Imaging completion condition satisfied?

NO

YES

**S609**
Interpolate data missing part of stored range image

**S610**
Perform inspection and measurement processes using range image

**S611**
Display visualized range image and measurement result

End

FIG. 9

## FIG. 10

Image I000

Image I001

Image I002

Image I00N

Range image memory

X=000
X=001
X=002

X=00N

Writing start position is
constant at Y = 0.

Position in X-direction is
determined by encoder
count basically at constant
intervals.

## FIG. 11

800

700

70

71

Europäisches
Patentamt

European
Patent Office

Office européen
des brevets

# EUROPEAN SEARCH REPORT

Application Number

EP 16 19 1643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 757 902 A1 (DEGUDENT GMBH [DE]) 28 February 2007 (2007-02-28) * abstract * * paragraph [0037] - paragraph [0055] * * figure 1 * ----- | 1-11 | INV. G01B11/25 |
| X | US 2009/080036 A1 (PATERSON JAMES [GB] ET AL) 26 March 2009 (2009-03-26) * abstract * * paragraph [0033] - paragraph [0081] * * figures 2,3,6 * * claims 1,18 * ----- | 1-11 | |
| A | US 2007/090189 A1 (SUWA MASAKI [JP] ET AL) 26 April 2007 (2007-04-26) * abstract * * paragraph [0029] - paragraph [0149] * * figures 2,3 * ----- | 1-11 | |
| A | US 2012/263347 A1 (ICHIMARU YUJI [JP]) 18 October 2012 (2012-10-18) * abstract * * paragraph [0017] - paragraph [0143] * * figures 1,3,4 * ----- | 1-11 | TECHNICAL FIELDS SEARCHED (IPC) G01B |

The present search report has been drawn up for all claims

| Place of search | Date of completion of the search | Examiner |
|---|---|---|
| Munich | 22 March 2017 | Kokkonen, Jukka |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 19 1643

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2017

| Patent document cited in search report | | | Publication date | Patent family member(s) | | | Publication date |
|---|---|---|---|---|---|---|---|
| EP | 1757902 | A1 | 28-02-2007 | CN | 1931110 | A | 21-03-2007 |
| | | | | EP | 1757902 | A1 | 28-02-2007 |
| | | | | ES | 2297586 | T3 | 01-05-2008 |
| US | 2009080036 | A1 | 26-03-2009 | EP | 2024707 | A1 | 18-02-2009 |
| | | | | ES | 2377462 | T3 | 27-03-2012 |
| | | | | US | 2009080036 | A1 | 26-03-2009 |
| | | | | WO | 2007129047 | A1 | 15-11-2007 |
| US | 2007090189 | A1 | 26-04-2007 | AT | 536528 | T | 15-12-2011 |
| | | | | CN | 1952595 | A | 25-04-2007 |
| | | | | EP | 1777487 | A2 | 25-04-2007 |
| | | | | JP | 2007114071 | A | 10-05-2007 |
| | | | | TW | I296324 | B | 01-05-2008 |
| | | | | US | 2007090189 | A1 | 26-04-2007 |
| US | 2012263347 | A1 | 18-10-2012 | CN | 102735166 | A | 17-10-2012 |
| | | | | EP | 2511654 | A1 | 17-10-2012 |
| | | | | JP | 4821934 | B1 | 24-11-2011 |
| | | | | JP | 2012220473 | A | 12-11-2012 |
| | | | | US | 2012263347 | A1 | 18-10-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009168658 A